(19) Europäisches Patentamt
European Patent Office
Office européen des brevets

(11) EP 1 808 212 A2

(12) EUROPEAN PATENT APPLICATION

(43) Date of publication:
**18.07.2007 Bulletin 2007/29**

(51) Int Cl.:
***A63F 13/12*** *(2006.01)*

(21) Application number: **06023257.6**

(22) Date of filing: **08.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.11.2005 US 272972**
**17.10.2006 KR 20060101073**

(71) Applicant: **Samsung Electronics Co., Ltd.**
**Suwon-si, Gyeonggi-Do (KR)**

(72) Inventors:
- **Severyn, Andre**
  **c/o Samsung Electronics, Co. Ltd.,**
  **Suwon-si**
  **Gyeonggi-do (KR)**
- **Harel, Aviv**
  **c/o Samsung Electronics Co. Ltd.,**
  **Suwon-si**
  **Gyeonggi-do (KR)**
- **Shoor, Omer**
  **c/o Samsung Electronics Co. Ltd.,**
  **Suwon-si**
  **Gyeonggi-do (KR)**
- **Choi, Joon-Hyuk**
  **c/o Samsung Electronics Co. Ltd.,**
  **Suwon-si**
  **Gyeonggi-do (KR)**
- **Hwang, Jae-Joon**
  **c/o Samsung Electronics Co. Ltd.,**
  **Suwon-si**
  **Gyeonggi-do (KR)**
- **Lee, Dong-Uk**
  **c/o Samsung Electronics Co. Ltd.,**
  **Suwon-si**
  **Gyeonggi-do (KR)**

(74) Representative: **Boakes, Jason Carrington**
**Harrison Goddard Foote**
**31 St Saviourgate**
**York YO1 8NQ (GB)**

# (54) System, apparatus and method for managing virtual entity on a network

(57) Disclosed is an apparatus for managing a virtual entity on a network, which carries computing functionality, display functionality, and interconnectivity functionality for transmitting data over a network, the apparatus including: a database for storing dynamic data and static data, the static data being stored in common in each client on the network and being combinable to represent a character of the virtual entity, the dynamic data including different information from virtual entity to virtual entity, and a character sharing unit for using the interconnectivity functionality to allow the character of the virtual entity to be shared with other devices over the network.

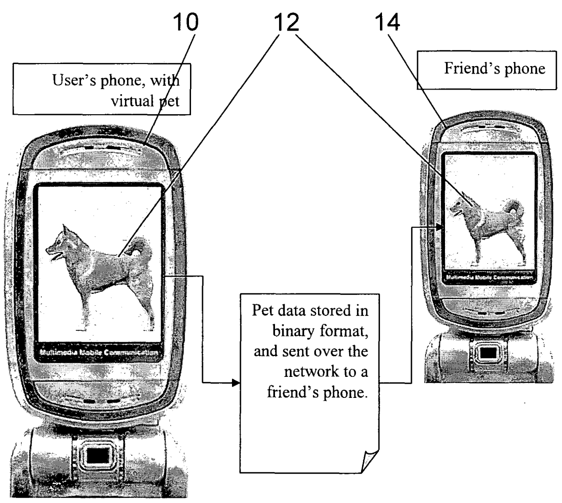


Figure 1



Printed by Jouve, 75001 PARIS (FR)

## Description

The present invention relates to a virtual entity on a network, more particularly, but not exclusively, the invention relates to issues of presence or exchange of an animated character over a network and, still more particularly, but not exclusively, the invention relates to a system, an apparatus and a method for managing presence or exchange of the character over a cellular telephony network.

The animated character may be a representative of the user, an avatar, or it may be a character relating to a computer game or any other kind of animated character, including an animated self-developing pet.

The self-developing electronic pet is a game that involves a character requiring consistent attention from its owner in order to thrive. If it receives the attention it grows and develops, if it does not then it deteriorates. The idea is that the pet is constantly present and requires constant attention from its owner.

The self-developing pet is generally based on a physical doll. The physical doll has a processor and memory, and has a physical existence. It can be given to people and returned. The self-developing pet requires attention as described above.

It is in principle also possible to have a virtual self-developing pet which is an animated character supported by a computer. The virtual self-developing pet detracts from the basic idea of the original physical self-developing pet in that it is not constantly present with the user and therefore cannot demand constant attention. The virtual self-developing pet is limited by the fact that a computer is not constantly switched on, or even if switched on, is not constantly present with the user. Even if the computer is a mobile computer, it is very awkward for a user to interact with the computer whilst he/she is walking for example.

Furthermore part of the experience of the self-developing pet is to share it with friends. The physical self-developing pet can be physically shared with friends, however the virtual self-developing pet can only be shared if issues of presence are dealt with. Thus it must be ensured that the virtual self-developing pet is not present at two locations at once, or that the virtual self-developing pet is not lost from all locations. The virtual self-developing pet is also required to develop over time, both physically and emotionally, just as a real pet grows and learns.

The present disclosure deals with issues of a virtual self-developing pet, including continuous availability of the virtual self-developing pet with its owner, the ability to share the virtual self-developing pet with others and issues involved in building a virtual community for the self-developing pet.

It is an aim of the present invention to at least partially mitigate the above-mentioned problems.

Accordingly, the present invention has been made to meet at least the above-mentioned demands, and an object of the present invention is to provide a system, an apparatus and a method for managing a virtual entity on a network such that a virtual self-developing pet is continuously available to its owner.

A further object of the present invention is to provide a system, an apparatus and a method for managing a virtual entity on a network such that a virtual self-developing pet can be shared with others.

A further object of the present invention is to provide a system, an apparatus and a method for managing a virtual entity on a network for the purpose of building a virtual community for a virtual self-developing pet.

According to one aspect of the present invention there is provided an electronic apparatus carrying computing functionality, display functionality, and interconnectivity functionality for transmitting data over a network, the apparatus comprising:

dynamic data, and static data, said dynamic and static data being combinable to represent a character on said device, and

a character sharing unit for using said interconnectivity functionality to allow said character to be shared with other devices over said network.

According to a second aspect of the present invention there is provided a system comprising a plurality of mobile communication devices, each device having computing, display and communication functionality, and comprising:

an engine for operating characters, the characters having personal behavior and an avatar, and

an exchange unit for allowing said characters to be shared with other mobile devices so as to operate with the same personal behavior and appearance thereon, thereby to provide a community environment for operating said characters.

According to a third aspect of the present invention there is provided a method of exchanging characters over a mobile telephony network between a plurality of mobile apparatus, comprising:

providing at each of said plurality of mobile devices a behavior engine for providing character-specific behavior according to character-specific behavior parameters;

providing at each of said plurality of mobile devices static data for display of respective characters, and
exchanging a given character between mobile devices by sending respective character-specific behavior parameters and identifying relevant static data.

According to a fourth aspect of the present invention there is provided a system for interaction between limited resource devices, each device comprising a local copy of a common user client, the devices being configured to exchange at least one text message to communicate parameter data for said commonly held user client.

According to a fifth aspect of the present invention there is provided a system for interaction between limited resource devices, wherein the limited resource devices are configured with a client for exchange of text-encoded binary data, for direct contact between said limited resource devices.

According to a sixth aspect of the present invention there is provided a method of electronic competition comprising:

developing attributes through a first electronic character,
setting a competitive task for said electronic character to perform with at least one other electronic character having corresponding attributes within a first virtual environment; and
within said first virtual environment selecting a winner of said competitive task from said first and said at least one other characters via assessment of a development level of said attributes.

According to a seventh aspect of the present invention there is provided a method of communicating binary information between client applications on mobile devices comprising:

formulating said binary information into at least one text message at a client application on a first mobile device, said text message being formulated for reading by a corresponding client application on a recipient mobile device;
adding to said text message a human readable header to appear on recipient mobile devices not equipped with a corresponding client application; and
sending said text message to a recipient.

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. That is, selected steps of the method and system of the invention could be described as being performed by a data processor, such as a computing platform for executing a plurality of instructions.

The invention is herein described, by way of example only, with reference to the accompanying drawings. With specific reference now to the drawings in detail, it is stressed that the particulars shown are given by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:

**Fig. 1** is a simplified diagram schematically showing a self-developing pet being exchanged between two mobile devices according to a first embodiment of the present invention;
**Fig. 2** is a simplified diagram schematically showing the arrangement of data for the self-developing pet of Fig. 1 into static and dynamic data;
**Fig. 3** is a simplified diagram schematically illustrating data exchange via a text message according to a preferred embodiment of the present invention;
**Fig. 4** is another simplified diagram schematically showing blocks of an engine for supporting a self-developing pet application, according to a preferred embodiment of the present invention;
**Fig. 5** is a simplified diagram schematically illustrating a process for generating a text encoded binary text message, according to a preferred embodiment of the present invention;

**Fig. 6** is a simplified diagram schematically illustrating the structure of the SMS message of Fig. 5;

**Fig. 7** schematically illustrates a simplified procedure for receiving a self-developing pet according to a preferred embodiment of the present invention;

**Fig. 8** is a simplified diagram schematically illustrating the sending of a decoration according to a preferred embodiment of the present invention;

**Fig. 9** is simplified flow diagram schematically illustrating the sending of a snack, according to a preferred embodiment of the present invention;

**Fig. 10** is a block diagram of the sending procedure for a self-developing pet, according to a preferred embodiment of the present invention and particularly showing the points at which loss of synchronization can lead to loss of the pet;

**Fig. 11** is a flow diagram of a scheme for automatic retrieval of the pet in the event of a timeout, according to a preferred embodiment of the present invention;

**Fig. 12** is a flow diagram of synchronization using a time stamp according to a preferred embodiment of the present invention;

**Fig. 13** is a block diagram of a trait and emotion engine according to a preferred embodiment of the present invention;

**Fig. 14** is a diagram showing how a change function can be used to change from a first set of traits to a second set of traits, according to a preferred embodiment of the present invention;

**Fig. 15** is a flow diagram illustrating the principle that two characters may be changed in different ways by the same external action, according to a preferred embodiment of the present invention;

**Figs. 16** and **17** show screen shots illustrating the principle of Fig. 15;

**Figs. 18**A **-** C are simplified diagrams schematically showing three different ranges of traits respectively. Fig. 18B shows how a particular range may define an overall emotion;

**Figs. 19**A **-** C are diagrams schematically showing how a change function changes traits directly and indirectly changes the emotion through the traits, according to the three ranges of Figs 18A-C;

**Fig. 20** is a flow chart that illustrates the principle that an external action causes a pet to act to accept or reject according to a present state, also causes changes of state according to the choice of action, and the new state leads to a new set of actions;

**Fig. 21** illustrates a series of interaction tables for pet, traits, emotions and actions, according to a preferred embodiment of the present invention;

**Figs. 22 - 24** are a series of screen shots illustrating a race application involving two self-developing pets, according to a preferred embodiment of the present invention; and

**Fig. 25** is a diagram schematically illustrating the operational flow during the race of the application of Figs. 22 - 24.

The present embodiments comprise a system, an apparatus and a method for supporting a self-developing pet on a mobile device and for creating a networked community of self-developing pet owners. The self-developing pet community is based on a single model that includes basic pet traits and behaviors including emotion, and a set of avatars. The model and the set of avatars are present on all the mobile devices in the community. The individual pet is then formed from a selected one of the avatars and an evolving set of parameters for the model. The individual pet has an owner device and may be transferred to and from other devices simply by specifying the current set of parameters and the selected avatar. Such a transfer is preferably carried out using binary data within a text message.

When transferring the pet, the present preferred embodiments ensure that the pet has a single presence at all times, meaning that its parameter set can only be independently updated on one device at a given time. Furthermore the present embodiment ensures that the pet is not lost if a particular device fails to receive it or fails to send it back to the owner.

At a deeper level the embodiments encompass communication between limited resource devices using binary encoded text, the communication between limited resource devices using text messaging, the communication between applications on different limited resource devices using text messaging and the communication between such applications using binary encoded text.

In addition the embodiments teach the creation of a community for the use of such animations, including a competitive environment for users to test their own pets against others.

The principles and operation of a system, an apparatus and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

Reference is now made to Fig. 1, which is a diagram schematically illustrating two electronic devices, such as mobile telephones or other wireless or cellular communication devices, being used in accordance with a first preferred

embodiment of the present invention. The devices preferably carry computing functionality, display functionality, and interconnectivity functionality for transmitting data over a network.

As illustrated, a self-developing pet is present on a first telephone 10, and its presence is represented by screen avatar 12. The identity of the pet, including a pointer to the avatar, as well as the parameters for the behavior model that individualize the pet, are encoded in binary format into a text message, typically an SMS (Short Message Service) message, so that the pet may be sent over the cellular network to a friend's telephone 14. Avatar 12 then appears on the friend's telephone to indicate the presence there of the pet.

It is particularly preferred that SMS is suitable for sending over the telephony network. However the use of other networks may also advantageously be used by the present embodiments. Two telephones located near each other may transfer data using an IR (InfraRed) link between their respective IR ports. Here, the binary SMS file is small and is therefore suitable for forming the basis of an IR communication. Likewise a local Hotpoint or Bluetooth™ connection could be used. The use of such connections may typically require certain additions to the user client.

Reference is now made to Fig. 2, which illustrates how data of the pet is organized. Data is organized as static data (type A) that is common to all the clients in the community, such as 3D model data 20, texture 22, animations 24 and sounds 26, and data that varies between pets or over time, (type B).

That is to say, the user clients contain the type A or static information, which is all of the information needed to support a community of pets. This includes a model of pet behavior, animations, textures and the like. Some of this static information such as the model applies to all of the different pets. Other information may apply to some pets and not others. Thus a particular avatar may be shared by all dogs of the same kind. Data of type B is dynamic data that varies between pets. It may include the name, age and specific kind of a particular pet, as well as the current state of its traits. It is pointed out that the trait values of the pet, as will be discussed in greater detail below, are in fact parameters for the pet behavior model. The dynamic behavior includes information which changes over the lifetime of a pet, such as the current state of a particular trait, or its age, and information which remains the same for a given pet over its lifetime such as its name. The dynamic information also includes data that is common to all pets of the same kind, thus a pointer to the correct avatar.

The dynamic data, including character specific data, together with an avatar which is common to multiple characters, say all dogs of a given breed, provides a representation of a given pet. The character specific data includes behavior parameters, as will be discussed in more detail hereinbelow, and the behavior parameters are allowed to evolve according to certain rules contained within the model. The model may further use parameters to be individualized for different breeds. Here, it is this evolution of the behavior parameters that makes the pet into a self-developing pet.

Referring now to Fig. 3, the above-mentioned static data is present on all machines so that a character sharing unit may be constructed to share an individual pet over the network simply by sending the dynamic data (type B), thus name, age, and parameters or traits. The character sharing unit preferably uses text messaging, for example SMS, to send the type B data.

The avatar is preferably present on all the user clients and thus constitutes part of the static data, even though not all pets use the same avatar.

Reference is now made to Fig. 4 which is a block diagram illustrating internal operation of a mobile telephone 40 to support the self-developing pet. Sharing unit 42 is as discussed above and in greater detail below. The static data 44 includes the models and avatars, and the models include the behavior model, as explained above. Specific data 46 is dynamic data and includes the pet specific information.

Presence control model 48 controls the character sharing unit 42 to ensure that the character has a unified presence on the network. The presence control preferably ensures that the same pet is only present on one device on the network at a given time. By the term present as used herein is meant partly that the avatar for the same pet only appears on one machine, although certain exceptions may be allowed to this rule. More importantly the presence control ensures that the pet specific data 46 can only be updated on one machine at a given time.

The pet may be sent to another device to be shared in some way with another user. Ways in which the pet can be shared are discussed in greater detail below. The presence control model 48 sets a time that the pet is expected back. Until that time is reached the pet does not appear on the originating machine unless it is actually sent back from the other device. If it is sent back from the other device then any modifications made to the pet on the other device are accepted as the parameters for the pet. If the pet does not return by the end of the time period then the pet simply reappears at the originating device and its original parameters are reinstated. If the pet is returned from the other device after the delay expires then any modified parameters from the other device are ignored. The presence feature is discussed in greater detail below.

The character sharing unit 42 preferably places a signature on a text message carrying the character specific data so that the message can be recognized as belonging to the pet community and thus can be routed to the appropriate client. If the client is not installed on the receiving phone then the message gets sent directly to the SMS client where it is displayed as a text message. Of course the message contains binary data and is therefore not readable. In a preferred embodiment the text message therefore includes a human readable message. Such a message may for example inform

the user how she can join the self-developing pet community. The character specific data is preferably binary data and the character sharing unit is configured to place such binary data in the text message.

The character sharing unit 42 is likewise configured to scan incoming text messages for signatures indicative of character data content. Incoming messages could either be a local pet returning or a visitor pet arriving.

The scanning is preferably carried out prior to a respective text message being sent to client applications, so that the text message is not sent to the SMS client before being sent to the pet client.

The character specific information typically comprises emotion parameter data which operates emotion engine 50. The emotion engine 50 with specific parameter data provides emotion-based behavior which differs between pet characters and differs over the evolution of a given pet character.

As explained above, the emotion engine 50 is configured to evolve the emotion parameter data slowly over time. The evolving behavior provides development of emotion-based behavior for the pet and makes the pet a self-developing pet.

A feature of the preferred embodiments is that there is no need for a server-side application for general running since clients are present on the user devices. Neither is therefore there any need for modification of the network. The only need for a server, if at all is for the initial download of the clients and subsequent updating. An embodiment may have a client initially provided in system ROM at manufacture. Thus a server would not even be needed for initial download.

In the above it was explained that binary information is sent via text message. The choice of text message and binary encoding thereof is now discussed in greater detail.

The issue of sending binary information between telephone users has three possible solutions as follows:

a. Peer to peer (P2P) communication: current cellular networks support P2P communication between phones and the service-provider (operator). This allows transfer of binary content to/from dedicated servers out of/ into the users' mobile phones.

b. SMS: A standard protocol that allows users to transfer non-vocal data between themselves and is supported on all mobile phones and all networks. SMS does not in general need server support at the application level.

c. Infrared/Bluetooth link: A method for transferring binary information between phones which are close to each other, or physically linked.

In the current art these solutions suffer from the following disadvantages:

a: P2P communication: Does not operate directly between users, but rather between users and a server. If it is desired to send binary data between users, it is necessary to establish a server-side solution.

b: SMS: Current SMS applications support only textual content. Furthermore, the SMS protocol sends SMS between telephones, and not between applications. SMS allows sending of only very small amounts of data.

c: Infrared/Bluetooth link: Requires the users to be physically close to one another.

As explained above, the preferred solution is to send a virtual pet over the cellular network using binary SMS, and at the same time maintaining a full user client on each telephone. The only data that needs to be sent to result in full transfer of the pet is parameter information that is specific to the individual pet. The parameter information fits into the limited size of the SMS.

**Representation of a pet**

A single virtual pet is represented by a large amount of data. Much of this data is dedicated to the physical representation of the animal: 3d-models, textures, animations, sounds and so on.

As explained the system acknowledges two types of information, as discussed above with respect to Fig. 2:

Static data (shared among all pets or pets of the same kind).

The static data is part of the user client referred to above and resides on each of the phones. The user client may additionally reside on a central server, or certain parts of the user client may reside on the central server, for example certain rarely used parts of the user client. Thus there may be a regular range of pets provided to everyone, and certain special pets that users can download especially. Thus in general every user either already has the user client, or has direct access to the server in order to download it.

New data may be added to the user client after the application is released. For example these may be new sounds, animations and so on. The new data is likewise accessible to all telephones, which are able to download the data as updates from the central server.

The physical representation that is included in the user client is static, that is non-changing, data of the pet, including three-dimensional models, textures, animations, and sounds. Such data is the same for all pets of the same kind and is therefore held in common within the user client.

Non-static data: The non-static data is the information needed to represent a specific pet. This data is created and stored in the user's telephone. It changes over time, according to the user's actions, as it is supposed to represent a living, changing organism.

The non-static data is the only data needed to reconstruct a specific pet on another phone, since, as explained, the other phone includes a user client.

Each specific pet need only store references to the static data it uses, not the data itself. Such is possible since the static data is already on the user's phone, or can be downloaded from a predefined server. Many different pets can thus share the same static data.

The following is an example of three pets who take model and texture data from the user client and have their own specific parameters for name and age:

Pet 1: Name "Johnny", Age: 12 days, Breed: "Cocker-spaniel", Texture: "Brown".
Pet 2: Name "Mookey", Age: 93 days, Breed: "Jindo", Texture: "Brown".
Pet 3: Name "Poko", Age: 2 days, Breed: "Jindo", Texture: "Yellow".

The data stored for each specific pet is as follows:

Name, Age, Traits (strength, intelligence etc), Breed (which corresponds to a 3d-model).

The amount of data needed to be sent, in order to reconstruct a certain pet on the other side is, therefore, very small. Only the non-static data is sent. Here, the traits information may be configured of information invisible to a user. That is to say it affects the behavior of the pet but it need not necessarily be brought directly to the attention of the user. Parameter data for the behavior or emotion model may also be provided. Such data may be part of the traits information or provided independently, and is discussed in greater detail below.

In the following the general flow of sending a pet via SMS is discussed with reference to Fig. 5.

First of all the pet instance, that is all the specific data including parameters, is gathered and compressed into an SMS message, stage 501. The data is then streamed into a binary stream in stage 503. The SMS format has the following two limitations which make the task difficult:

A. The SMS format is textual and not binary, as it is intended for written text messages.
On the contrary, the representation of a pet is binary information.

B. SMS messages are limited to a small number of characters, currently 80 characters. Since it is desired to send a complete representation of a pet in one SMS message, sufficient data should thus fit within the 80 character length.

A preferred embodiment overcomes limitation A by converting the information from binary to textual in stage 505. A preferred conversion uses the 7-bit method known to the skilled person. In the 7-bit method, each 7 bits of the binary information are converted to 1 textual character. The 7-bit method has the unfortunate side-effect of inflating the overall size of the data by 15% due to the loss of 1 bit for every byte.

As to limitation *B*: as explained hereinabove, actually very little binary information is needed to represent a specific pet since the system assumes the existence of the static shared data, as explained.

**Constructing the SMS message**

The above is not sufficient for creating an SMS message that can be sent to other mobile telephones. The SMS message itself may thus preferably include extra information, beside the pet instance information:

That is, some header information is needed to identify the above-mentioned message as a special SMS. SMS messages were originally designed for textual messages, as described above, and are generally automatically sent to a user's SMS client which displays the message automatically on the user's screen. In this case, displaying the content of the sent message according to the present invention is useless. The message rather needs to be recognized prior to being picked up by the SMS client and redirected to the self-developing pet application for parsing. Thus, header information as set according to the present invention performs a functionality that allows the receiving phone to identify the SMS and direct it to the relevant application, before it is displayed on the screen.

In some cases the SMS message containing the pet may be sent to a telephone which does not have the self-developing pet application installed. In this case, it is preferred that the content of the message will automatically be displayed, because there is nothing to recognize the headers and nowhere to divert the message to anyway. The SMS thus appears on the screen as a random collection of characters. It is therefore necessary to add some coherent text at the beginning of the message for the baffled receiver to understand what has happened. Thus the message may

include a plain text tag such as "Phone Pet - not supported on your phone", or "U have been sent a pet. Dial *111 to unlock".

When the same message arrives at a telephone where the application is installed, the message itself will not be shown at all - but directed immediately to the self-developing pet application, as discussed. The mechanism is explained in greater detail later on.

Reference is now made to Fig. 6, which superimposes onto Fig. 5 the resultant SMS message.

The SMS message contains three parts as follows:

a. **Header** 601. The header preferably comprises two characters, and identifies the sent SMS message as a Pet SMS message.

b. **Not-supported message** 603. A message, as described above appears on those phones which do not support our application.

c. **Pet encoding information** 605. This part of the message includes the actual binary information needed to reconstruct the pet. This information is the non-static data referred to above.

Reference is now made to Fig. 7, which is a diagram schematically illustrating sending of the SMS and its reception at another mobile telephone, the receiving telephone or recipient.

When the SMS arrives at a recipient who has self-developing pet support, stage 701, the arrived message is first identified as a special message in stage 703. There is thus provided a sniffer application which inspects every incoming message. If the first two characters correspond to the predefined header signature, the message is directed to the self-developing pet application rather than being displayed on the screen.

Once the content of the message is delivered to the self-developing pet application, the application is able to begin a process of parsing the message. Parsing only requires part 605 of the message which carries the text encoded binary data. The header 601 and non-supported message 603 have by now served their purpose in getting the arrived message to the application and thus cease to be relevant.

The pet information included in the SMS message is now decoded in a process which is the reverse of the encoding process.

Here, since SMS messages may become corrupted over the network, a validation test is necessary at this point, stage 705. The parameters of the received pet are firstly tested against a set of reasonable conditions, for example a requirement that the age parameter cannot be negative. If even one of the parameters does not pass the test, the entire SMS is preferably discarded. Otherwise the binary data is used to reconstruct the pet 707 which is then displayed on the recipient's screen 709.

In the event that the message is received by a recipient who is not configured with the self-developing pet application, the message itself is directly displayed on the screen. Immediately following the header is the message 603 indicating that the feature is not supported, so that the recipient is able to understand what is happening.

Within the scope of the self-developing pet application, there may be other interactions between self-developing pet clients for which SMS messaging, aside from the sending of pets, can be used which enhance the community experience of the self-developing pet. Figures 8 and 9 are flow charts illustrating two examples of such interactions. Fig. 8 illustrates the sending of a decoration or accessory to a particular pet, and Fig. 9 illustrates the sending of a cake.

Referring now to Fig. 8, a decoration or accessory is an object the pet can wear (medal, sun-glasses, hat, etc). Representing a decoration is similar to the way a pet is represented: there is a global repository within static information (e.g., 3d models and textures of the decorations). The amount of data needed to reconstruct the decoration on the other side is therefore very small: that is, the needed data is a reference to the name of the 3d-model to use, the color and so on. In Fig. 8 the decoration is shown on the originator's pet in stage 801. The decoration is transferred using a text-encoded binary SMS in stage 803 and the accessory is shown on the pet of the recipient in stage 805.

Referring now to Fig. 9, and the same principle as that described in FIG. 8 is illustrated for a snack. A snack is a present the user (owner) can give to their own or another pet (i.e. cake, dried-meat etc). Giving the pet a snack improves its emotional state in some way. Once again, there is a finite database of available snacks, and the message transfer, stages 901, 903, 905 require only to send the ID of the specific snack being provided.

Reference is now made to Fig. 10, which is a flow chart illustrating time delay procedures involved in transferring a pet from one telephone to another. That is to say SMS delivery is asynchronous and does not usually involve confirmations. The asynchronous nature of the delivery can thus give rise to pets being present at two locations at the same time or being deleted from all locations.

More particularly, when the message is sent the user does not know for sure when, or even if at all, it will arrive. The message may take several seconds, or minutes to be sent. In any case, the recipient's phone may be switched off - so the message will arrive only when it is switched on, which may be days later. Further, since SMS does not involve a direct link with the recipient, it is possible that the pet is being sent to a wrong number altogether. Such a problem cannot be determined when sending the text message.

The problem of the wrong number is overcome at the receiver's side using the non-supported message referred

to above.

The above problems may be summed up as follows: the user has no idea when or if the pet information-bearing message will reach its destination.

Thus, returning to the example of the decoration in Fig. 8, suppose a user sends a decoration to a friend. After the decoration is sent, it is deleted from the user's phone. If the SMS does not arrive at the recipient's phone, the decoration is lost in both locations.

In other cases it may be desired to send a pet to play in a friend's phone, and then have it come back home. Such a feature considerably enriches the community aspect of the self-developing pet and therefore it is preferable that the feature can be supported reliably. Part of the feature is that when the pet is sent away from its source telephone it has to disappear from the source phone.

A trivial implementation is to use two back to back SMS messages: the first is sent from the sender to the recipient, and the other is sent from the recipient back to the sender after a few minutes, returning the pet home. The above is a risky solution, since the recipient may never actually receive the SMS, or the SMS may be corrupted on receipt. In such a case, the recipient may never send the response SMS, and the pet would be lost forever, meaning its status on the source telephone would remain "away".

Another possible problem is that the pet-sending SMS may be received only after a long time. This may occur if say the recipient's telephone was switched off for two days. The result is a long overdue return SMS.

Fig. 10 illustrates a flow chart showing the passage of the pet between the user's phone 1001 and the recipient's phone 1003 over time. The pet is sent to the recipient in stage 1005 and disappears at that point from the sender's phone. The pet is received at the recipient's phone if his phone is switched on. Even if the message is received at the recipient it may be corrupt or the recipient may be busy with something else. Assuming however that the message is safely received and the recipient is not busy, the pet is played with and returned home with a return SMS, stage 1007.

However if the return message is not received by the sender for whatever reason then the naive scheme as set out above leads to the pet becoming lost.

Reference is now made to Fig. 11, which is a flow diagram illustrating an auto-return mechanism procedure which deals with the above issues. The auto return mechanism ensures that if the pet is not returned to the originating telephone within a predetermined time frame, typically a few minutes, say ten minutes, then the pet reappears on the originating telephone automatically. Late return messages are ignored, along with their data. The return message is not in fact required, since complete data about the pet has always been present on the originating phone. The above works if the SMS never reached its destination - wrong number etc., or if it did reach the destination but was ignored - user busy or phone switched off, etc. or if the message was corrupted or there were delays in the messaging path or for any other reason.

Reference is now made to Fig. 12 which illustrates an embodiment in which time signatures are used to synchronize between the sender and recipient. Assuming that the two telephones have synchronized clocks, then it is possible for the recipient to identify and deal with stale messages. The sender simply prepares an SMS 1201, and then attaches a time-signature to the sending SMS 1202. This signature is attached by the sender, and represents the time in which the SMS was sent. Within a single time zone there is little risk of unsynchronized clocks, since the cellular network can provide a time. The SMS is received by the recipient, 1204 and the time signature is checked against the current time, 1205. If the signature is fresh then the pet is played with and returned 1206. However, if the recipient obtains an SMS which has a stale signature, say several hours old, 1207, it may be treated in a different manner. For example the application may display a message such as "A friend came to visit you, but you were not available, so he returned home".

Reference is now made to Fig. 13, which is a diagram illustrating a model for providing trait and emotion behavior in the character. A living pet has a different character which is reflected in its behavior. In the virtual world, what distinguishes a self-developing pet from any other kind of doll is its ability to change over time in a way that seems natural. Thus in the present embodiments a mathematical behavior model that reflects and simulates natural pet character is presented.

In order to model a pet characteristic the present embodiments involve the creation of a mathematical scheme 1301 in which each pet has a set of traits 1303 that are changed according to external actions and events that are operated on the pet. For example, an external event can be time change (the pet will get hungrier) or an external action can be a user command (the user will order the pet to sit, stand, beg, roll over, shake, turn etc.). Any combination of such traits state creates a single emotion. The pet will act according to this emotion by performing actions that are related to this emotion. For example, when the pet is happy it will do happy animations.

The general solution 1301 comprises the following three elements:

a. **Traits** 1303 - A set of parameters that reflect the state of the pet. Traits are changed according to external events and actions according to a unique change function.

b. **Emotions** 1305- A set of emotions that are determined by a combination of trait states by the translation

function.

c. **Pet Actions** 1307- A set of action that reflects each state.

**Unique Character Creation**

**Traits:**

The traits are a set of parameters that reflect the state of the pet. These parameters hold the physical state of the pet. The traits are changed according to external actions with a different change function that is coupled with the pet characteristics. Each pet can have its own Traits, creating a variation of possible characteristics.

**Emotions:**

The emotions work in a similar way to the traits in that they are parameters, but this time they reflect the emotional state of the pet.

**External Event or Action**

An external event is an input event that can be external or internal to the application. The external event typically starts a chain reaction which will eventually change the trait state of the pet. For example each hour a time event occurs. The time event leads to a change function which changes one or more of the current traits of the pet. Thus the pet may become more tired or hungrier.

There are also external actions that are not totally imposed on the pet. In these events the pet has the ability to choose if he would like to accept or reject the action. After this external event the pet may decide, according to its current trait state and emotion, if it chooses to accept or reject the external action. If the pet chooses to accept the action its traits will change according to an "Accept change function". If the pet chooses to reject the external event its traits may change according to a "Reject change function". These functions define the traits as they will be following the action. For example accepting food may lead to reduction of the hunger trait.

**Change function:**

$$f(ExternalEvent, TraitState) = NewTraitState$$

The change functions are a translation function between two traits states. Each pet type has a unique change function for each action or event. And so external actions and events change the pet traits in a slightly different way for each character, creating many possible characters. The result of the same user action on two different pet characters will thus create two different states, one for each of the pets. Thus, slightly different change function can create numerous different pet characters. For example one pet will be happier after eating while the other one will be sleepier.

Reference is now made to Fig. 14, which is a diagram illustrating a change function which brings about changes in eight different traits represented by bar graphs. The graph on the left illustrates a trait status prior to the event that triggers the change function and the graph on the right illustrates the trait status following the event. As described above, eight traits values are converted by means of a change function unique to a specific pet character, respectively.

Reference is now made to Fig. 15 which illustrates the same change function being applied to two different characters, character 1 and character 2, leading to different end states which are substantially unique to each.

Figs. 16 and 17 are screen shots which respectively show a current status of a pet, followed by an action, followed by a graph of the traits being changed, followed by a new status. In Figs. 16 and 17 the current status - hungry - and the action -eat- are the same but the traits change is different (because the characters are different) and consequently so is the new status.

Reference is now made to Figs. 18A - C, which each illustrate different possible ranges of traits. Each Figure is a bar graph that illustrates a combination of traits, and Fig. 18B specifically leads to the overall emotion "happy", as will be described in greater detail below. Figs. 19A -C illustrate change functions for each of the ranges of Figs. 18A - C and show for example how the happy emotion of Fig. 18B can be changed into a sad emotion by virtue of an external action.

$$[\, f(TraitState) = Emotion \,]$$

The pet emotions are determined by a state of the traits. Each character has its unique translation function *f* (*TraitState*)= *Emotion* which translates a set of traits states into one or more emotions. Because the translation function is unique to each pet characteristic the same set of traits state may create a different overall emotion. For example a Dog pet with "Fullness" > 80% may be set to have a "Tired" Emotion while a Cat pet may be set to have a "Joyful" emotion. This variation of translation function allows the creation of different pet characters. In the state where two translation functions yield two different emotions the system can do one of the following:

choose between two possible states, each defined by accepting only one of the emotions. For example this may be achieved using an emotion priority table, or

the system can choose to join the accepted emotion into an Emotion set where the two emotions (or more) are active at the same time. For example the pet could be "Hungry" and "Tired" at the same time.

For example *f*(*Traitstate*) could be:

$$f(TraitState) = if\{(Ful\ln ess < 20\%\} => Emotion = Hungry$$

$$f(TraitState) = if\{((Strength < 40\%) And (Fatigue > 80\%\} => Emotion = Tired$$

$$f(TraitState) = if\{(Health < 40\%) And (Strength < 25\%)\} => Emotion = Pain$$

**Action:**

Each emotion has a set of actions that reflects this emotion. The actions in the set correspond to animations. Each screen, scenario or character in the application can attribute a different set of actions to each emotion. Doing so creates a variety of ways that the pet can reflects its emotions. There are many types of actions that the pet can perform, and a non-limiting list of actions that can vary according to the emotional state is as follows:

a. Visual Effects - Different animation set for each emotion.
b. Vocal - Different sound set for each emotion.
c. Textual - Different text hint or text bubbles that the pet shows according to its emotion.
d. Rejection - According to the emotion state of the pet (Traits and Emotion) the pet can choose to reject the action asked by the user.
e. Etc...

Reference is now made to Fig. 20, which is a state diagram illustrating how an event or action may be varied according to the current emotional state and may also lead to a change function leading to a change in the current state. Here, the future actions are therefore in accordance with the future state. That is, if an event or action occurs, a behavior is chosen according to the type of the event, a current trait and a current emotion.

If the behavior is rejected according to the choice, a trait state is changed according to a predetermined rejection change function, and a translation function is applied according to the changed trait state. On the contrary, if the behavior is accepted according to the choice, a trait state is changed according to a predetermined acceptance change function, and a translation function is applied according to the changed trait state.

Further, as described above, a current trait state is produced by applying the translation function, and an emotion corresponding to the produced current trait state is presented. In this case, a change in behavior is continuously set according to the current emotion.

**General Flow**

**Data Structure**:

Referring now to Fig. 21 and the system has what are known as ground tables.

The ground tables of the system are as follows:

2101 Pets - This table holds all pets that are currently on the phone
2102 Traits - a set of all possible traits that pets could have.
2103 Emotions - a set of all emotions a pet could have.
2104 Action - a set of all actions a pet could perform.

There are connection table between the tables:

1. Pet Traits 2105 - This table holds an index that attaches all possible traits for a specific pet.
2. Pets Emotions 2106 - This table hold all the current emotion that the pet has at the current time. The emotions in this table are the emotions that answer to the translation function of the traits state.
3. Emotions Actions 2107 - This table hold all possible actions that could be performed for each emotion.

**Development model**

1. The embodiment described above may be improved by distinguishing two particular emotions as development emotions. The development emotions change more slowly than the other emotions. The development model provides a pet that is easier for a user to comprehend and for which greater differentiation can be provided between different breeds. The result is a greater sense to the user of dealing with a live pet. In addition progress appears over time.
In the development model:
Traits offsets are set to be the same for all breeds and ages. However the different breeds and ages differ in that the traits have different maximum values that they can attain. Exemplary offsets are shown in table 2 below.
The maximum values of the various traits are set according to the breeds' characteristics.
Traits to be considered include: Health, Fatigue, Fullness, Cleanliness, Stress, Obedience, and Intimacy.
The first five traits may change rapidly and without much effort. Intimacy and Obedience are the special development traits, which means that they are much more persistent and long term. The user has to earn the pet's trust as it develops. The pet cannot die, but the system can punish the user for not taking care of his pet by dropping the intimacy level.
The pet can learn to perform tricks. The user has to train the pet specifically for each trick. Learning curves preferably differ among breeds and ages. The user may scold or praise the pet after each command to hasten or otherwise affect the learning process.
Emotions typically used include Sick, Hungry, Tired, Angry, Calm, Joyful. Emotion is determined according to the traits, with the exception of the development traits.
The pet may accept or reject an action on the basis of the emotional state and traits.
If the pet does not agree to an action, it preferably tells the user exactly why. Thus a pet may not eat because it is sick or it has recently eaten, in which case it will preferably inform the user "I don't feel so good", or "I am full". The pet may refuse to go for a walk with the user when the intimacy attribute is especially low, in which case it will inform the user "I don't want to go with you".
In a preferred embodiment, intimacy and Obedience change more rapidly for puppies. Scold & Praise actions preferably affect different dogs differently, and even affect the same dog differently, say depending on the last action, or the time that has elapsed since the last action.
Reference is now made to Table 1 which shows a series of emotions in a predetermined order. Each emotion is associated with one or more traits. Each trait is represented by a variable which ranges between 0% and 100%.of a predetermined maximum value. In addition some values may be represented by absolute values. A threshold value is set above which or below which the emotion has effect. Thus if health is below 25% then the animal is sick. As sick is the highest emotion in the priority list the animal is sick regardless of the lower items in the emotion table. If none of the emotions are beyond their threshold then the animal is calm, the lowest item in the table.

**Emotions**

According to the following priority (Sick is highest):

**Table 1. Emotion per trait level and their order of priority.**

| | |
|---|---|
| Sick | Health < 25% |
| Hungry | Fullness < 25% |

(continued)

| | |
|---|---|
| Tired | Fatigue > 75% |
| Angry | Stress > 75% |
| Joyful | Health > 70% and Fullness > 50% and Fatigue < 50% and Stress < 30% |
| Calm | None of the above |

Reference is now made to Table 2 which shows values for changing the emotions over time. It is noted that the intimacy and obedience emotions change more slowly than the others.
Hourly changes

**Table 2. Changes over time (hourly) to traits**

| Emotion | Health | Fatigue | Fullness | Cleanliness | Stress | Intimacy | Obedience |
|---|---|---|---|---|---|---|---|
| Joyful/Calm/ Tired/Angry | 0 | +7 | -7 | -1 | -3 | 0 | 0 |
| Hungry | -4 | +9 | -5 | -1 | 0 | -1 | -1 |
| Sick | -1 | +15 | -2 | -1 | 0 | -3 | 0 |

Reference is now made to Table 3 which illustrates the conditions under which a pet will accept a particular action if it is offered.
Accept conditions:

**Table 3. Acceptance of Actions**

| | |
|---|---|
| Walk | Emotion Calm or Joyful. Intimacy >= 70 Last walk more than 10 minutes ago. |
| Game | Emotion Calm or Joyful. Intimacy >= 70 |
| Eat | Emotion not Sick. |
| Sleep | Emotion not Angry. Fatigue > 50% |
| Cure | Health < 50% |
| Clean | Emotion not Angry. Cleanliness < 50%. Intimacy > 50 |
| Trick | Emotion Calm or Joyful. Intimacy >= 70<br>Trick was learned.<br>According to Obedience level, the pet may refuse to perform (randomly) and then scolding may help raise the obedience level. |

Reference is now made to table 4 which illustrates the affect on various traits of accepting the actions in table 3.

**Table 4. Effects of accepting an Action**

| | Health | Fatigue | Fullness | Cleanliness | Stress | Obedience | Intimacy |
|---|---|---|---|---|---|---|---|
| Walk | X | +8 | -5 | -2 | -4 | X | +2 |
| Ding-Dong | X | +6 | -4 | -1 | -1 | X | +2 |
| Stanga | X | +10 | -6 | -3 | -2 | X | +2 |
| Learn-English | X | +3 | -1 | X | X | X | +2 |
| Today saying | X | X | X | X | -1 | X | X |
| Eat | If full, -10 | +1 | +30 | -3 | -2 | X | +1 |
| Sleep | +3 | To 0 | -10 | X | -10 | X | X |
| Cure | To Max | +20 | -5 | X | +30 | X | -1 |
| Clean | +3 | +10 | -4 | To Max | +15 | X | -1 |

(continued)

| | Health | Fatigue | Fullness | Cleanliness | Stress | Obedience | Intimacy |
|---|---|---|---|---|---|---|---|
| Command | X | +1 | -1 | X | -1 | X | +1 |
| Win race | +1 | +15 | -10 | -2 | -8 | X | +2 |

Table 5 is the corresponding table that illustrates the effect of refusing an action.

**Table 5. Effect of Refusing an Action**

| | Health | Fatigue | Fullness | Cleanliness | Stress | Obedience | Intimacy |
|---|---|---|---|---|---|---|---|
| Walk | X | X | X | X | +1 | X | X |
| Eat | X | X | X | X | X | X | X |
| Sleep | X | X | X | X | +1 | X | X |
| Cure | X | X | X | X | +15 | X | -2 |
| Clean | X | X | X | X | +5 | X | -2 |
| Command | X | X | X | X | X | X | X |
| Lost race | X | +15 | -10 | -2 | +5 | X | X |

The effect of praising or scolding is set such that an action within a minute of the previous praise or scold has no affect.
If praising or scolding is carried out about a minute after a trick command, then the affects are as in tables 6 and 7. As shown the affect may differ according to the pet's reaction to the command: that is whether it has performed the trick, or has refused out of spite.

**Table 6. Effects of a Scold Action**

| | Health | Fatigue | Fullness | Cleanliness | Stress | Obedience | Intimacy |
|---|---|---|---|---|---|---|---|
| Punish | X | +2 | X | X | +10 | X | -1 |
| Caution | X | +1 | X | X | +6 | X | -1 |
| Punish (after spite) | X | +4 | X | X | X | +2 | X |
| Caution (after spite) | X | +2 | X | X | X | +1 | X |

**Table 7. Effects of a Praise Action**

| | Health | Fatigue | Fullness | Cleanliness | Stress | Obedience | Intimacy |
|---|---|---|---|---|---|---|---|
| Pet | X | X | X | X | -4 | X | +1 |
| Praise | X | X | X | X | -5 | X | +1 |
| Pet (after preformed trick) | X | X | X | X | -4 | +1 | +1 |
| Praise (after preformed trick) | X | X | X | X | -5 | +1 | +2 |
| Pet (after spite) | X | X | X | X | X | -2 | X |
| Praise (after spite) | X | X | X | X | X | -2 | X |

**Traits maximum values**

As mentioned above, the traits are set with maximum values that reflect the differences between breeds. For example take the following breeds which have the following traits:

- Cocker spaniel: They are natural retrievers and built to run into undergrowth. Tolerant of children and other pets.

- Papillon: Outgoing and friendly. Likes snuggling and playing. Can be very difficult to house train. The Papillon needs regular brushing.
- Beagle: They can be stubborn and difficult to train. Need constant activity and may get bored easily. They are gentle animals who are great with children and other dogs. Brush as needed and only bathe when absolutely necessary.
- Jindo: The Jindo is a lean yet muscular dog and carries itself proudly. The breed keeps itself clean and is extremely easy to house train.

The above traits can be represented by sets of maximum values as shown in Table 8.

**Table 8. Maximum values of various traits for different breeds.**

| | Health | Fatigue | Fullness | Cleanliness | Stress | Obedience | Intimacy |
|---|---|---|---|---|---|---|---|
| Cocker Adult | 100 | 90 | 120 | 100 | 110 | 200 | 200 |
| Papillon Adult | 80 | 100 | 80 | 120 | 100 | 200 | 200 |
| Beagle Adult | 80 | 110 | 100 | 100 | 80 | 200 | 200 |
| Jindo Adult | 120 | 130 | 110 | 80 | 110 | 200 | 200 |

Now younger and adult dogs can be defined as follows:
For a puppy: take 50% of the adult maximum value (except Obedience and Intimacy, which remain at maximum 200).
For mid-grown: take 80% of the adult maximum value (except Obedience and Intimacy, which remain at maximum 200).
Table 9 shows suggested initial values for a new puppy according to the breeds exemplified above

**Table 9. Initial trait values per breed for a new puppy**

| | Health | Fatigue | Fullness | Cleanliness | Stress | Obedience | Intimacy |
|---|---|---|---|---|---|---|---|
| Cocker | 100% | 0 | 50% | 100% | 0 | 100 | 100 |
| Papillon | 100% | 0 | 50% | 100% | 0 | 80 | 120 |
| Beagle | 100% | 0 | 50% | 100% | 0 | 70 | 100 |
| Jindo | 100% | 0 | 50% | 100% | 0 | 120 | 80 |

The puppy may grow and be brought to peak physical condition (Health 100%, Fatigue 0, Fullness 100%, Cleanliness 100%, Stress 0). Obedience and Intimacy need not change.

Learning of tricks is also breed dependent. Table 10 shows suggested values of a learning table for different breeds. The table indicates how many times it is necessary to train the dog with a trick before it knows the trick:

**Table 10. Number of times needed to learn a trick per breed**

| | Sit | Roll | Turn | Bark | Paw |
|---|---|---|---|---|---|
| Cocker | 5 | 15 | 6 | 10 | 7 |
| Papillon | 9 | 22 | 9 | 14 | 12 |
| Beagle | 7 | 20 | 7 | 12 | 10 |
| Jindo | 2 | 7 | 4 | 6 | 5 |

Reference is now made to table 11, which illustrates a number of snacks and indicates accept conditions for the pet to take the snack. The table also illustrates the effect on existing traits of the pet accepting the snack.
Snacks

**Table 11. Accept Conditions and Change Function for a Snack**

| Item | Accept condition | Change function |
|---|---|---|
| 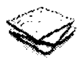 Biscuit | Not Sick. Not Tired. | Stress -2 |
| 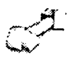 Chewing Gum | Not Sick. Not Tired. Stress < 80%. | Cleanliness +15% (clean the teeth) |
| 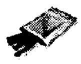 Dried Meat | Not Sick. Not Tired. Stress < 80%. | Intimacy +2 |
| 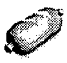 Sausage | Not Sick. Not Tired. Stress < 80%. | Obedience +2 |
| 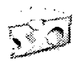 Cheese | Not Sick. Not Tired. | Stress -5 |
| 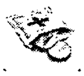 Vermicide | Intimacy > 100 and Stress < 50% | Health + 15% |
| 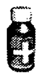 Tonic | Stress < 30% | Intimacy +5 |
| 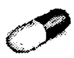 Recuperative Medicine | Intimacy > 150 | Stress -20% |

It is noted that while the presently preferred embodiments refer to sending text-encoded binary regarding pet information, the principle of using an SMS message to communicate parameter data for a commonly held user client may be applicable to other applications and other types of information and is within the scope of the present invention. Furthermore, the principle of using text-encoded binary data for direct contact between mobile devices is likewise within the scope of the present invention and the concept of using text-encoded binary data for communication between user clients over the air is also within the scope of the present invention. The principle of using text messaging to transfer binary data between mobile devices is likewise encompassed by the present invention.

The above principles may be extended to other types of information for transfer between mobile and other limited resource devices.

It is expected that during the life of this patent many relevant devices and systems will be developed and the scope of the terms herein, particularly of the terms mobile device, cellular communication, text message, etc. is intended to include all such new technologies *a priori.*

Additional objects, advantages, and novel features of the present invention will become apparent to one ordinarily skilled in the art upon examination of the following examples, which are not intended to be limiting. Additionally, each of the various embodiments and aspects of the present invention as delineated hereinabove and as claimed in the claims section below finds experimental support in the following examples.

**Example of Use: A Race**

A significant feature of the self-developing pet in a mobile device is that experiences with the self-developing pet can be shared and a community of users can be created. One way to share a self-developing pet and the associated experiences is to have joint activities in which the pets work together or compete with each other. This may or may not be achieved by sending one pet to a friend's phone.

One activity that is possible is the race. Two self-developing pets are present on the same phone and compete with each other in a race. The attributes, traits and emotions of the self-developing pets determine who wins so that the user who has invested more time and care in his pet wins.

Reference is now made to Fig. 22 which is a diagram showing a sequence of possible screen shots involved in initiating a race.

Any user can initiate a Race by sending an SMS to another user who has a virtual pet installed on his phone - screen shot 2201. The user who receives the SMS can accept or decline the Race proposal, screen shot 2202.

If the recipient accepts the Race proposal, then his telephone enters a state in which he sees the two pets (his own, and the sender's pet) stretching and preparing for a Race. A countdown from 3 to 1 begins - screen shot 2203.

Referring now to Fig. 23 and Fig. 24, when the countdown finishes, a flag is presented to indicate the start of the Race - screen shot 2301.

The two pets begin the race in a stadium, and preferably run in separate running lanes. The pets run through the curves of the running lanes, through three different backgrounds 2301, 2303 and 2305. Once they reach a certain point in the 3rd background, one of the pets starts to speed to the finish line in 2401.

The winner of the Race is decided upon the pet traits. The exemplary formulae to calculate a score for each pet is as follows:

$$2 * (\text{pet's strength value} + \text{pet health value}) - 1.5 * (\text{pet's fatigue value})$$

Or

$$\text{Pet's obedience value} + \text{pet health value} - 1.5 * (\text{pet fatigue value}) .$$

Other similar relations may also be utilized with similar or alternative traits and emotions.

Through the calculation formulae, the pet with the highest score wins the Race.
If the scores are equal, the user that received the Race proposal, wins the Race.

The sequence at the end of the race depends on which pet wins. If the visitor pet wins then the sequence of screen shots 2401, 2403, 2405 is shown. If the home pet wins then the sequence 2410, 2412, 2414 is shown.

In a preferred embodiment the race may be shown simultaneously on the sender's and receiver's phone. Since both phones calculate the winner in the same way the phones do not actually need to synchronize with each other for this purpose. The end of the race is thus different on each phone since the announcement of the result has to show what the home pet did.

The race serves as an incentive for the users to develop their pet, for example by increasing their pet's strength by feeding him, or by increasing their pet's health by curing him, and giving him medicines, it's also an incentive for the users to let the pet sleep from time to time, so his fatigue will be minimum. Furthermore it serves as a focal point for users to compare their efforts since the best treated pet wins.
After the Race is finished the winner's pet gets a gold medal and the loser gets a silver medal.

If the home pet wins then the visitor (the loser) gets an SMS with Silver medal, and if the home pet loses he gets a silver medal and the visitor (the winner) gets an SMS with Gold medal.

The medals are preferably added to the pet's decorations inventory, and can be worn at any time. After the Race is finished, the originator who sent his pet to the recipient receives his pet back.

After the Race is finished, both pets' traits are modified. An exemplary modification is the following:
For both competitors:
Strength: -5 points, Health: -5 points, Fatigue: +3 points, Fullness: -5 points, Cleanliness: -5 points, Intelligence: +2 points, Intimacy: no change.
For the winner:
Satisfaction: +20 points, Stress: -5 points.
For the loser:
Satisfaction: -5 points, Stress: +20 points.

Reference is now made to Fig. 25, which is a flow chart that illustrates the general flow for the race. As explained above, an originating user sends the pet to the recipient for the race. The recipient receives and accepts the invitation to race. If the recipient does not accept the race then the pet is returned to the originator. Otherwise the race begins. The pets' scores are then calculated and one of the pets wins the race. The appropriate pet owner is informed of the victory and the other pet owner of the defeat and the originator's pet is returned to its source.

In somewhat more abstract terms the race may be replaced by any other task, preferably a competitive task, meaning any task wherein a character finishing first or winning or doing better can be identified. Such a task provides a method of electronic competition which includes developing attributes through one's own electronic character, and

then setting the competitive task for the electronic character to perform with, or more accurately against, one or more other electronic characters within the virtual environment of the mobile telephone.

Within the electronic environment a winner of the competitive task is then selected from amongst the characters via assessment of the development of the attributes. Thus the user who puts more effort into his pet wins the race. The race gives a chance for users to share their pets and benefit from the level of development that they have put into their pets.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. An apparatus for managing a virtual entity on a network, which carries computing functionality, display functionality, and interconnectivity functionality for transmitting data over a network, the apparatus comprising:

   a database for storing dynamic data and static data, said static data being stored in common in each client on said network and being combinable to represent a character of said virtual entity, said dynamic data including different information from virtual entity to virtual entity , and
   a character sharing unit for using said interconnectivity functionality to allow said character of said virtual entity to be shared with other devices over said network.

2. The apparatus of claim 1, wherein said character sharing unit is configured to send said dynamic data to other devices to carry out said sharing, said static data being assumed to be present on said other devices.

3. The apparatus of claim 2, wherein said dynamic data for sending includes a pointer for identification of an avatar from a group of avatars.

4. The apparatus of claim 1, wherein said character sharing unit is configured to use text messaging to carry out said sharing.

5. The apparatus of claim 4, wherein avatars are located on said other devices and said text messaging carries said dynamic data including a pointer to an avatar associated with a respective pet.

6. The apparatus of claim 5, further comprising a presence control model for controlling said character sharing unit to ensure that said character has a unified presence on said network.

7. The apparatus of claim 6, wherein said presence control model is configured to prevent presence of said character at said device when said character has been sent to another device.

8. The apparatus of claim 7, wherein said presence control model is configured to reinstate presence of said character at said device if said character does not return from said another device after a predetermined time.

9. The apparatus of claim 8, wherein said presence control model is configured to reinstate presence of said character at said device when said character returns from said other device by acceptance of said character specific data as modified by said other device.

10. The apparatus of claim 6, wherein said presence control model is configured to allow said character to appear on an originating device and on said other device but to allow modifying of said character specific data only on said other device.

11. The apparatus of claim 6, wherein said presence control model is configured to allow said character to appear on an originating device and on said other device but to allow modifying of said character specific data only on said originating device.

12. The apparatus of claim 4, wherein said character sharing unit is configured to place a signature on a text message carrying said character specific data to render said text message recognizable as comprising character specific data for operating said character on said other device.

13. The apparatus of claim 12, wherein said character sharing unit is configured to place binary data in said text message.

14. The apparatus of claim 12, wherein said character sharing unit is configured to scan incoming text messages for signatures indicative of character data content.

15. The apparatus of claim 14, wherein said character sharing unit is configured to carry out said scanning prior to a respective text message being sent to client applications.

16. The apparatus of claim 1, wherein said character specific data comprises emotion parameter data for an emotion engine, said emotion engine being configured to provide emotion-based behavior for said character.

17. The apparatus of claim 16, wherein said emotion engine is configured to evolve said emotion parameter data slowly over time, thereby to provide development of said emotion-based behavior for said character.

18. A system for managing a virtual entity on a network, which comprises a plurality of mobile communication devices, each device having computing, display and communication functionality, the system comprising:

an engine for operating characters, the characters having personal behavior and an avatar, and
an exchange unit for allowing said characters to be exchanged with other mobile devices so as to operate with the same personal behavior and appearance thereon, thereby to provide a community environment for operating said characters.

19. The system of claim 18, wherein each mobile communication device has a similar set of avatars and a behavior engine to provide behavior according to behavior parameters, such that said being exchanged is accomplishable for a given character by indicating which avatar is to be used and providing respective behavior parameters.

20. The system of claim 19, wherein said exchange unit is configured to indicate which avatar is to be used and to provide said behavior parameters by inclusion in a text message.

21. The system of claim 20, wherein said exchange unit is configured to mark said text message with a signature.

22. A method of managing a virtual entity on a network to exchange characters over a mobile telephony network between a plurality of mobile devices, comprising:

providing at each of said plurality of mobile devices a behavior engine for providing character-specific behavior according to character-specific behavior parameters;
providing at each of said plurality of mobile devices static data for display of respective characters, and
exchanging a given character between mobile devices by sending respective character-specific behavior parameters and identifying relevant static data.

23. The method of claim 22, further comprising selecting some of said behavior parameters as development traits that develop more slowly than other parameters to provide stable development of respective characters.

24. The method of claim 22, further comprising selecting maximum values for respective parameters, thereby to define a character type, and whereby a new character type can be added by defining a new set of maximum values.

25. A system for interaction between limited resource devices for managing a virtual entity on a network, each device comprising a local copy of a common user client, the devices being configured to exchange at least one text message to communicate parameter data for said commonly held user client.

**26.** The system of claim 25, wherein said limited resource devices are cellular communication devices.

**27.** The system of claim 25, wherein said text message comprises text encoded binary data.

**28.** A system for interaction between limited resource devices for managing a virtual entity on a network, wherein the limited resource devices are configured with a client for exchange of text-encoded binary data, for direct contact between said limited resource devices.

**29.** The system of claim 28, wherein the limited resource device is a cellular telephony device.

**30.** The system of claim 28, wherein said client for exchange of text-encoded binary data is configured to form said text encoded binary data into a text message with an identifying header, and to recognize incoming messages having such a header.

**31.** A method of electronic competition for managing a virtual entity on a network, the method comprising:

developing attributes through a first electronic character,
setting a competitive task for said electronic character to perform with at least one other electronic character having corresponding attributes within a first virtual environment; and
within said first virtual environment selecting a winner of said competitive task from said first and said at least one other characters via assessment of a development level of said attributes.

**32.** The method of claim 31, wherein said first virtual environment is within a first cellular communication device and wherein said at least one other electronic character is transmitted to said cellular telephony device.

**33.** The method of claim 31, wherein said attributes comprise at least one of the groups consisting of a trait, and an emotion.

**34.** The method of claim 31, wherein said attribute is affected by being selected or not selected as a winner.

**35.** The method of claim 32, wherein said transmitting comprises sending by text messaging.

**36.** The method of claim 31, wherein said text messaging comprises making use of the short messaging service (SMS).

**37.** A method of communicating binary information between client applications on mobile devices for managing a virtual entity on a network, the method comprising:

formulating said binary information into at least one text message at a client application on a first mobile device, said text message being formulated for reading by a corresponding client application on a recipient mobile device;
adding to said text message a human readable header to appear on recipient mobile devices not equipped with a corresponding client application; and
sending said text message to a recipient.

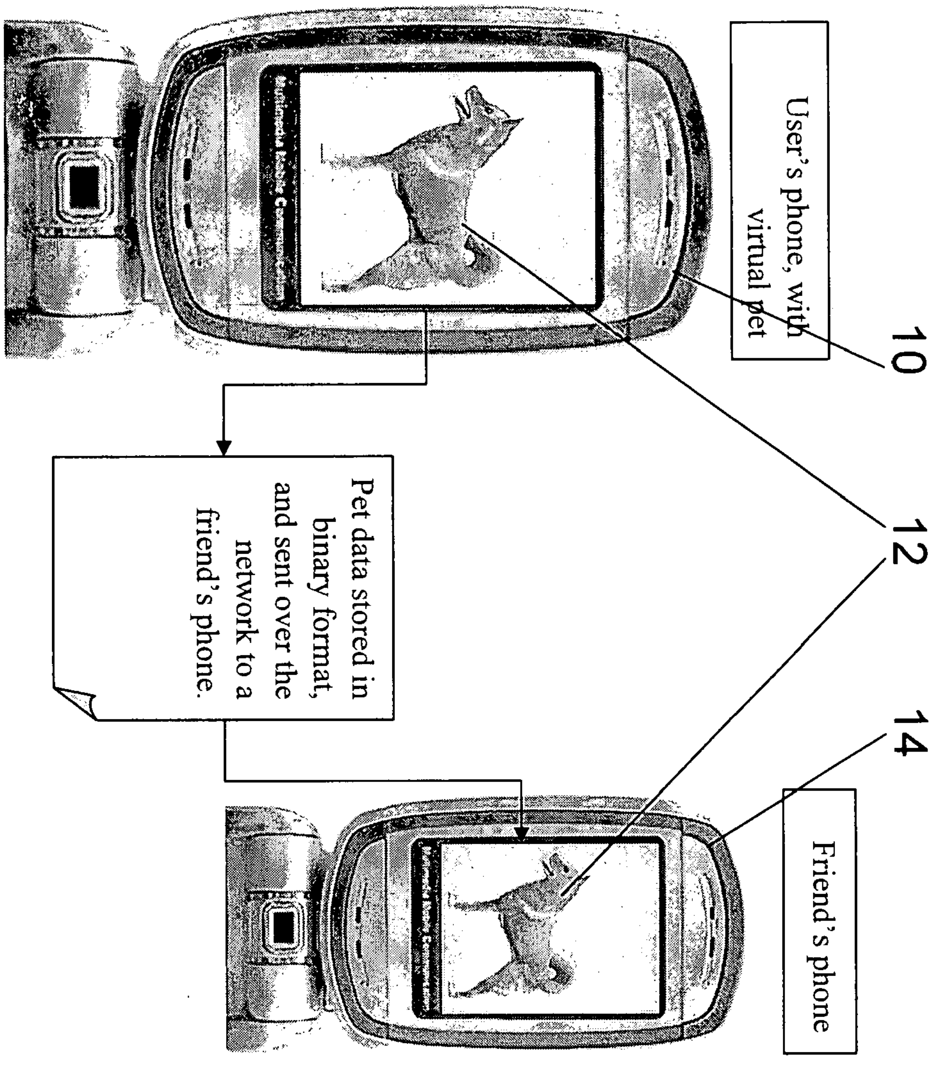
User's phone, with virtual pet
10
12
14
Pet data stored in binary format, and sent over the network to a friend's phone.
Friend's phone

Figure 1

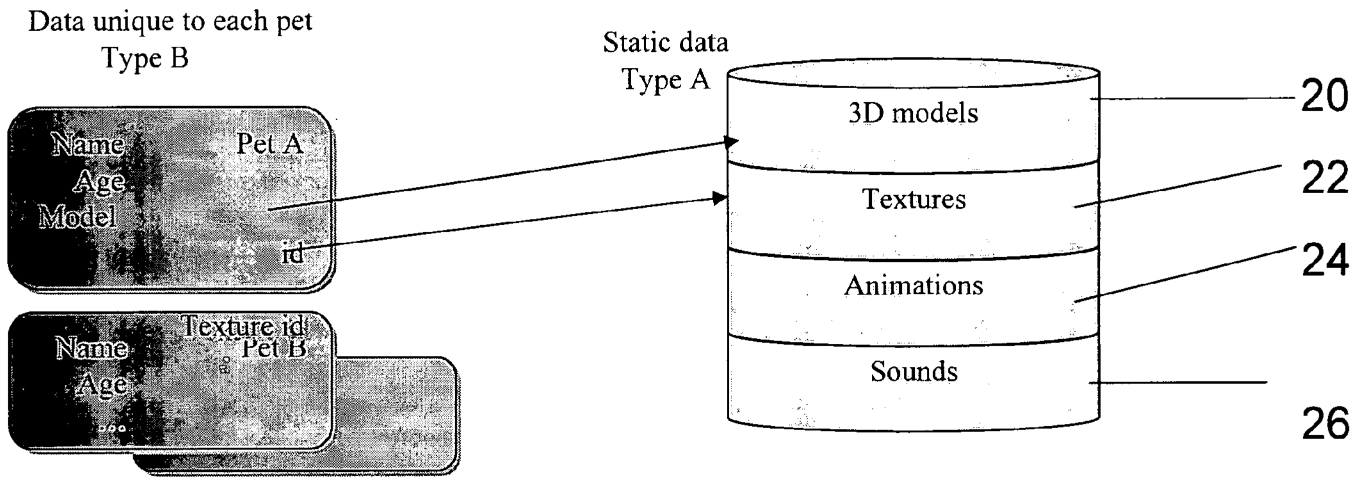


**Figure 2**

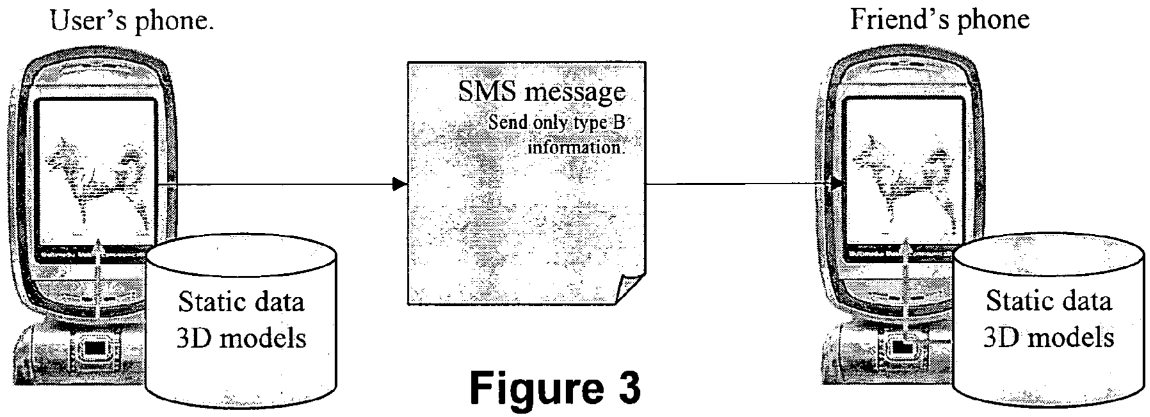


**Figure 3**

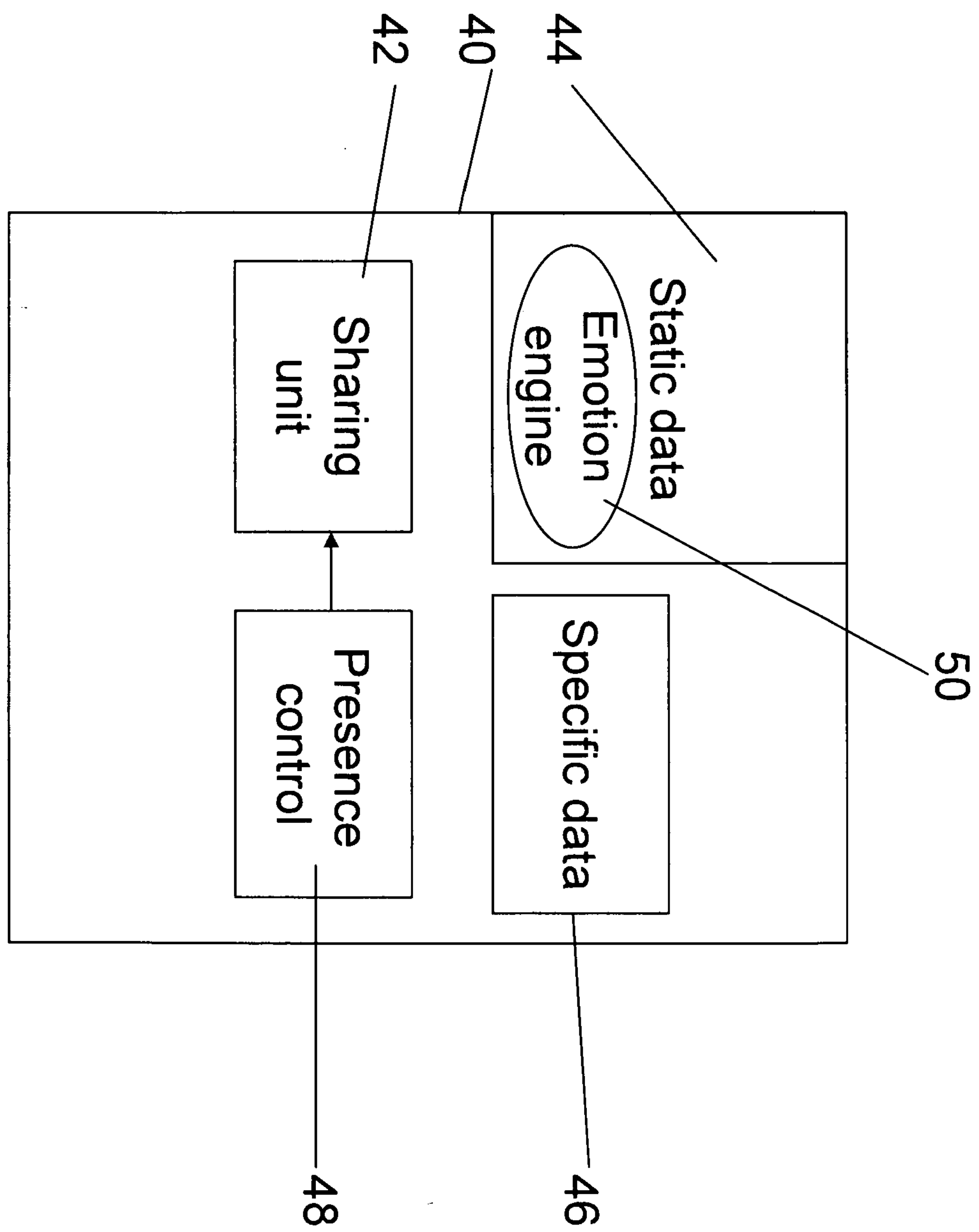
44
40
42
Static data
Emotion engine
Sharing unit
50
Specific data
Presence control
46
48

Figure 4

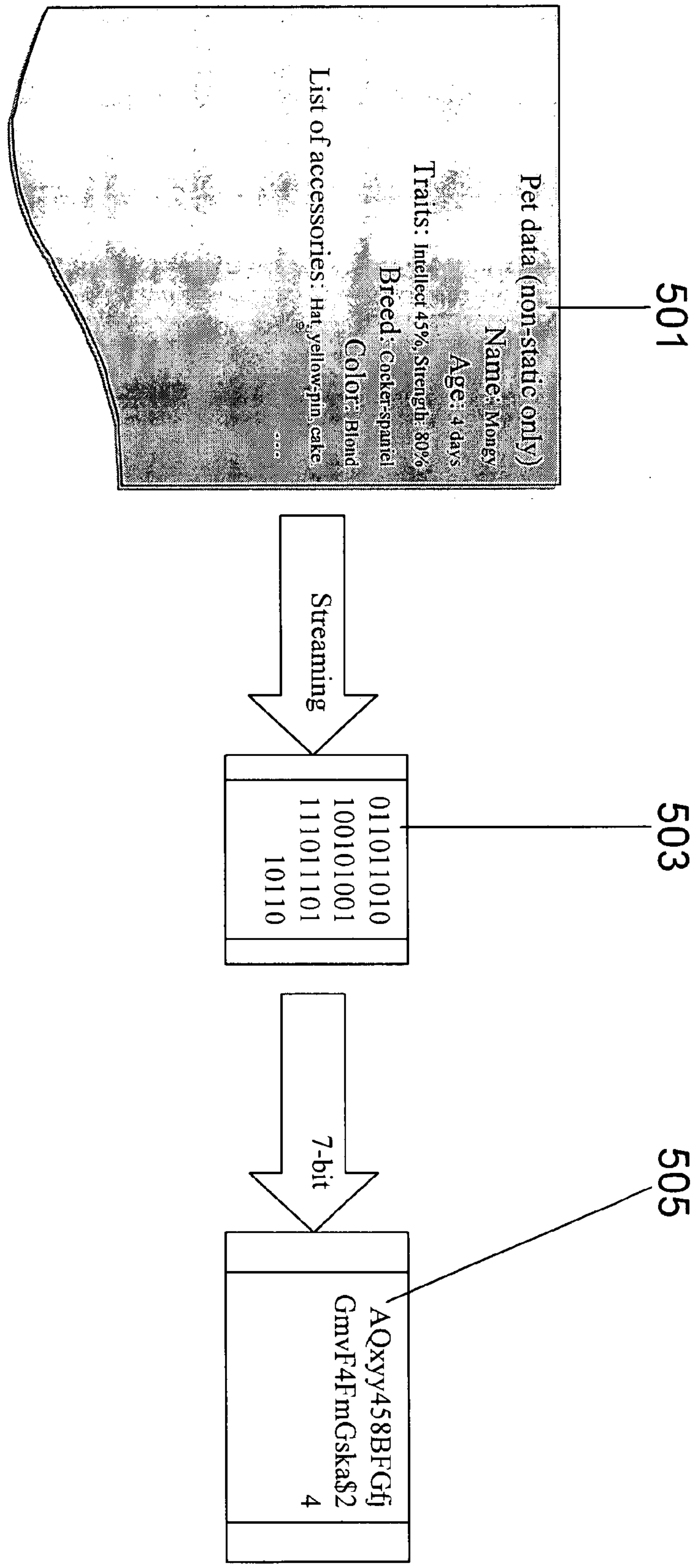
Pet data (non-static only)
Name: Mongy
Age: 4 days
Traits: Intellect 45%, Strength: 80%
Breed: Cocker-spaniel
Color: Blond
List of accessories: Hat, yellow pin, cake
...
501
Streaming
011011010
100101001
111011101
10110
503
7-bit
AQxyy458BFGfj
GmvF4FmGska$2
4
505

Figure 5

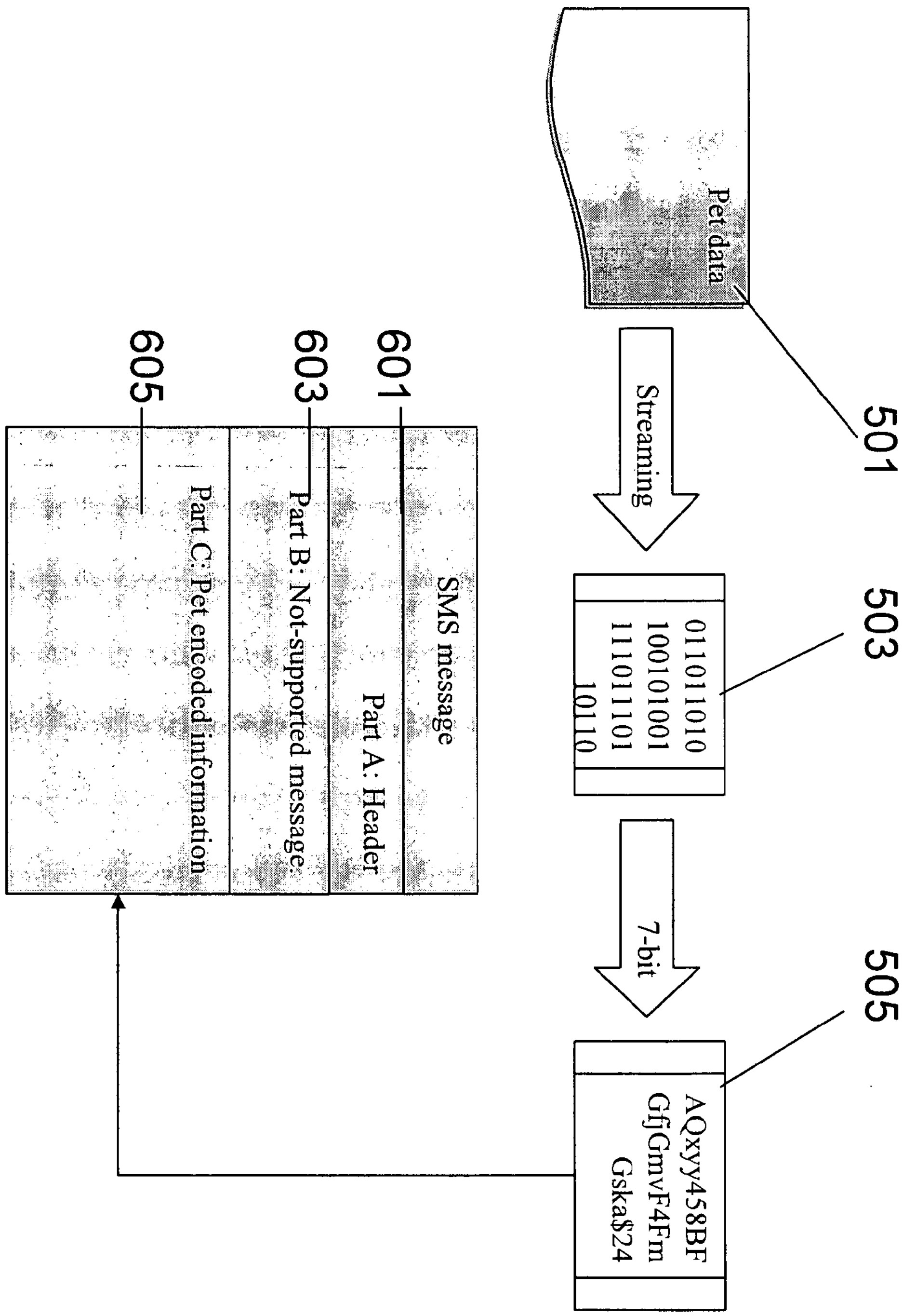
Pet data
501
Streaming
0110110101
1001010011
1110111011
0110
503
7-bit
AQxyy458BF
GfjGmvF4Fm
Gska$24
505
SMS message
Part A: Header
Part B: Not-supported message.
Part C: Pet encoded information
601
603
605

Figure 6

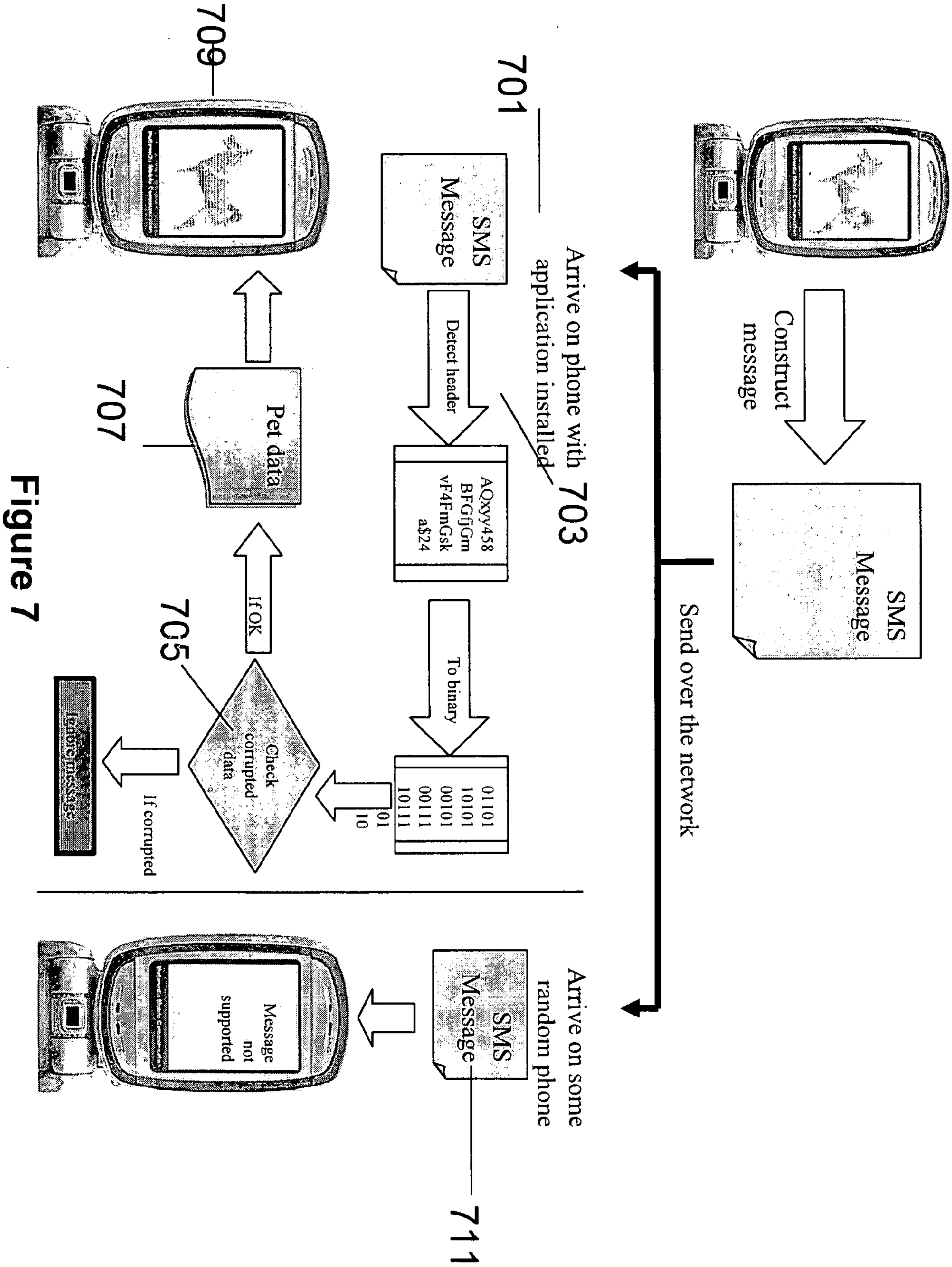
Construct message
SMS Message
Send over the network
Arrive on phone with application installed
Arrive on some random phone
701
SMS Message
Detect header
703
AQxyy458
BFGfjGm
vF4FmGsk
a$24
To binary
01101
10101
00101
00111
10111
01
10
Check corrupted data
705
If OK
If corrupted
Error message
Pet data
707
709
SMS Message
711
Message not supported

Figure 7

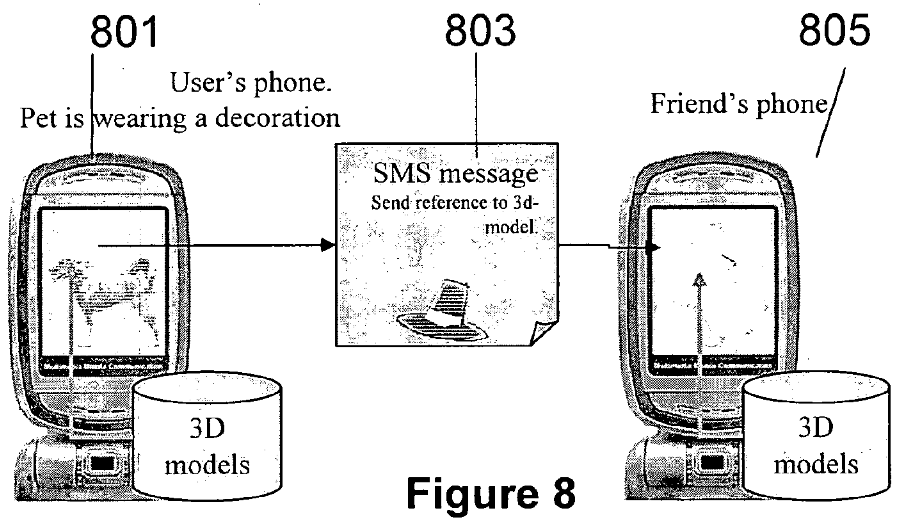


Figure 8

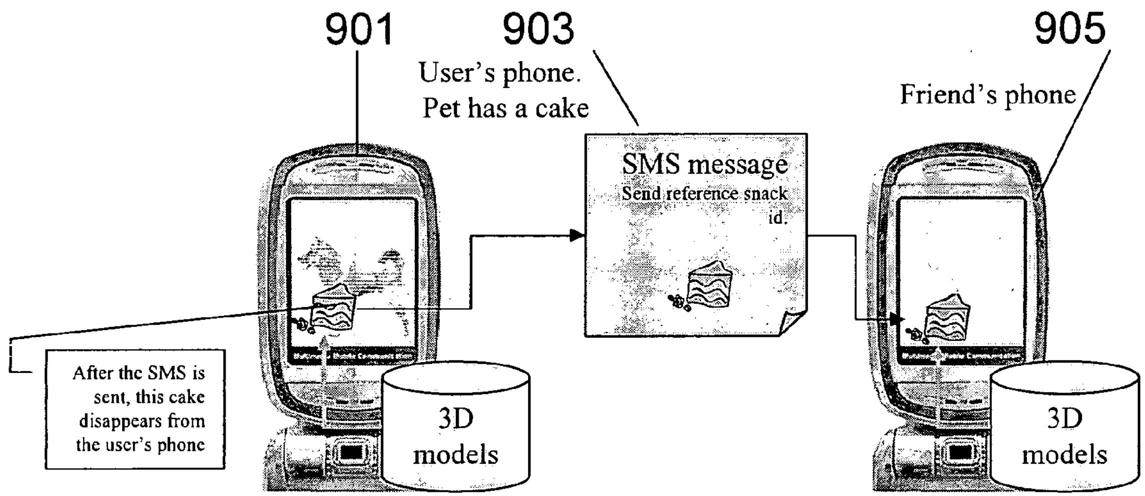


Figure 9

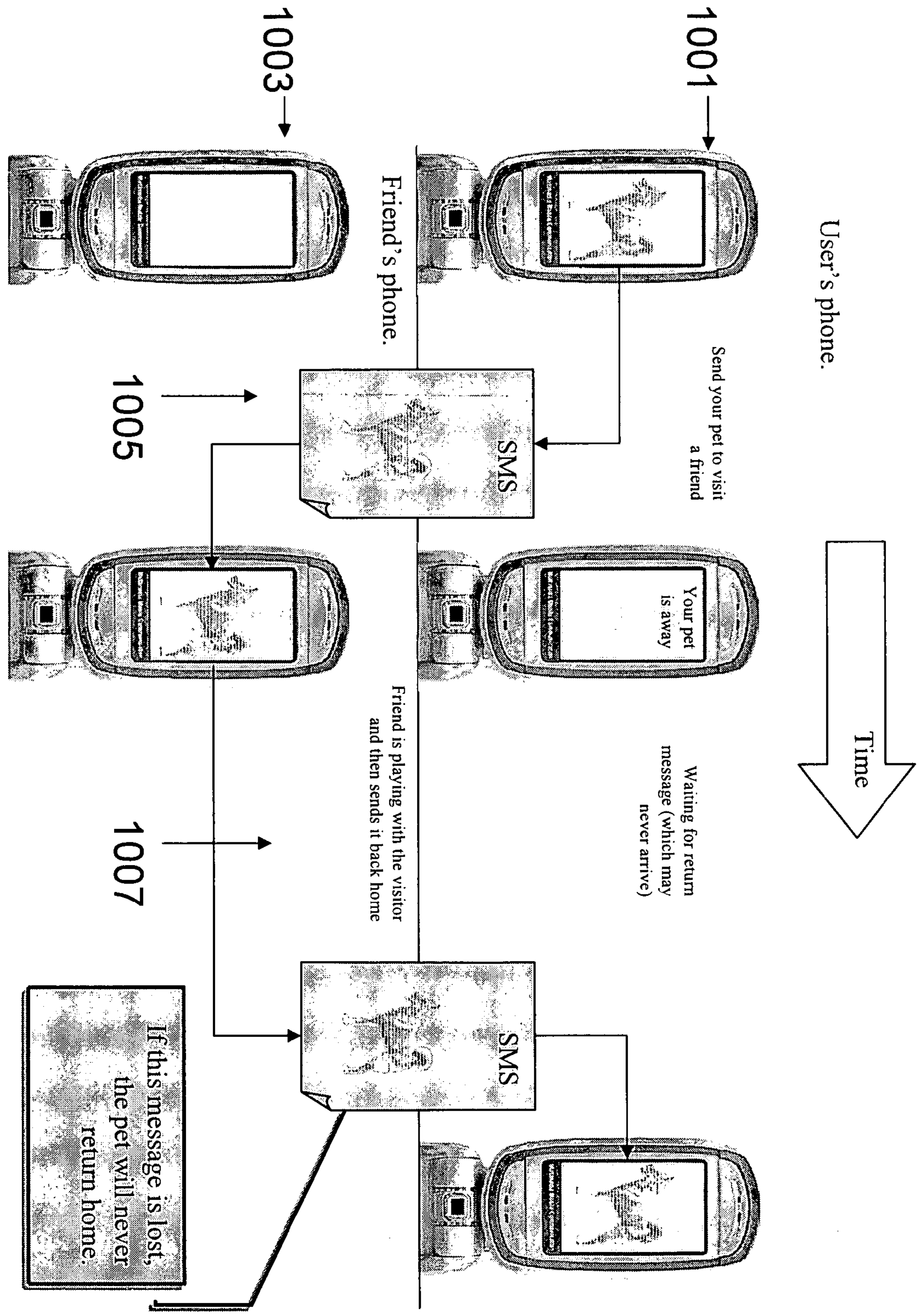

1001
1003
User's phone.
Friend's phone.
Send your pet to visit a friend
SMS
1005
Time
Your pet is away
Waiting for return message (which may never arrive)
Friend is playing with the visitor and then sends it back home
1007
SMS
If this message is lost, the pet will never return home.


Figure 10

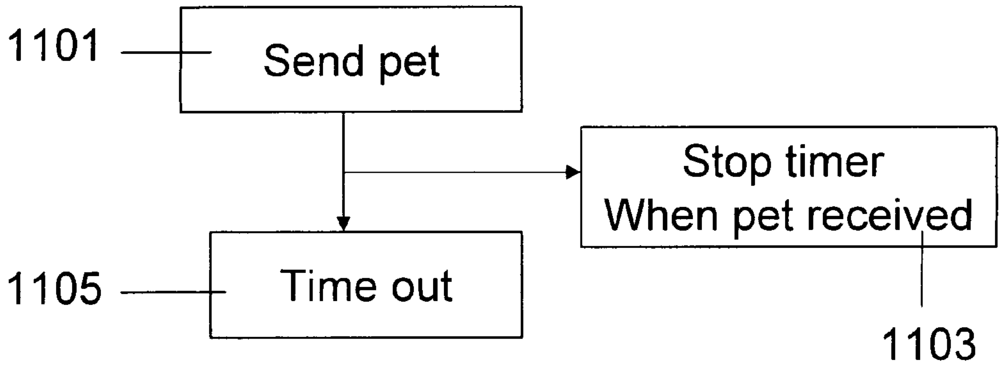


Figure 11

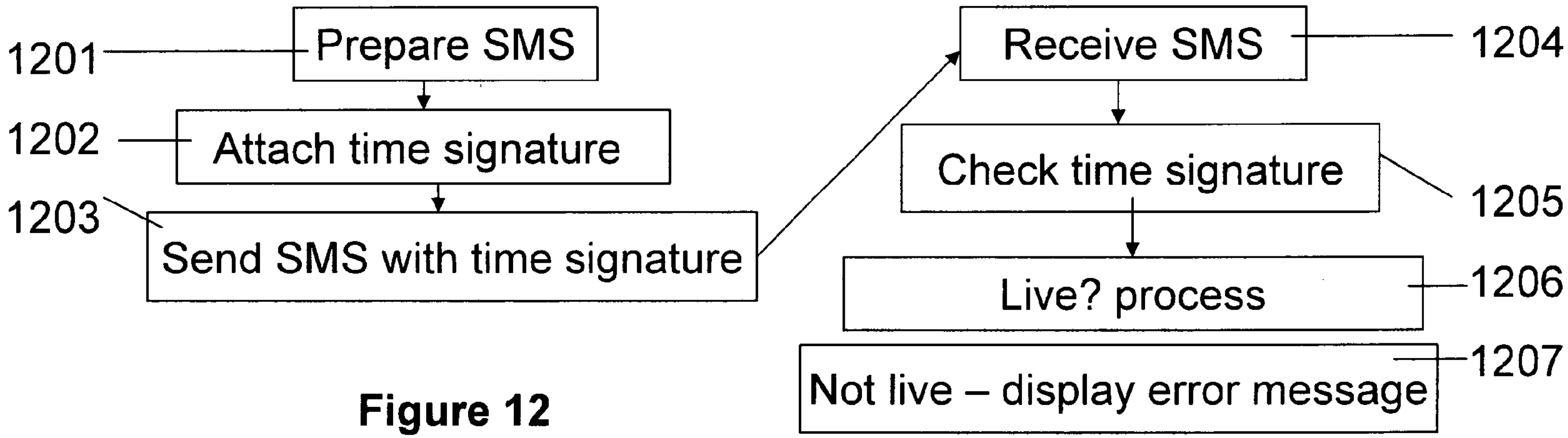


Figure 12

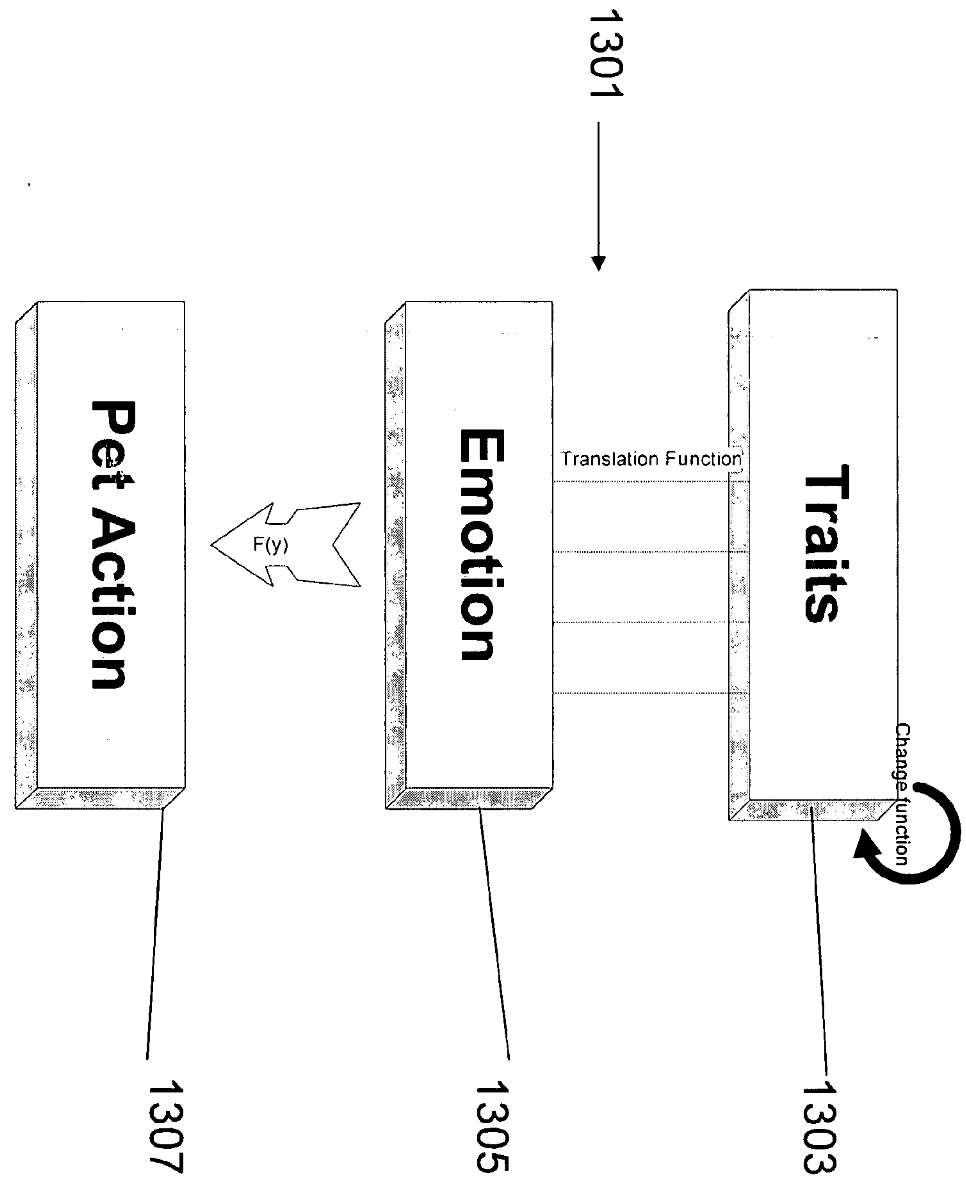
1301
Traits
Translation Function
Change function
Emotion
F(y)
Pet Action
1303
1305
1307

Figure 13

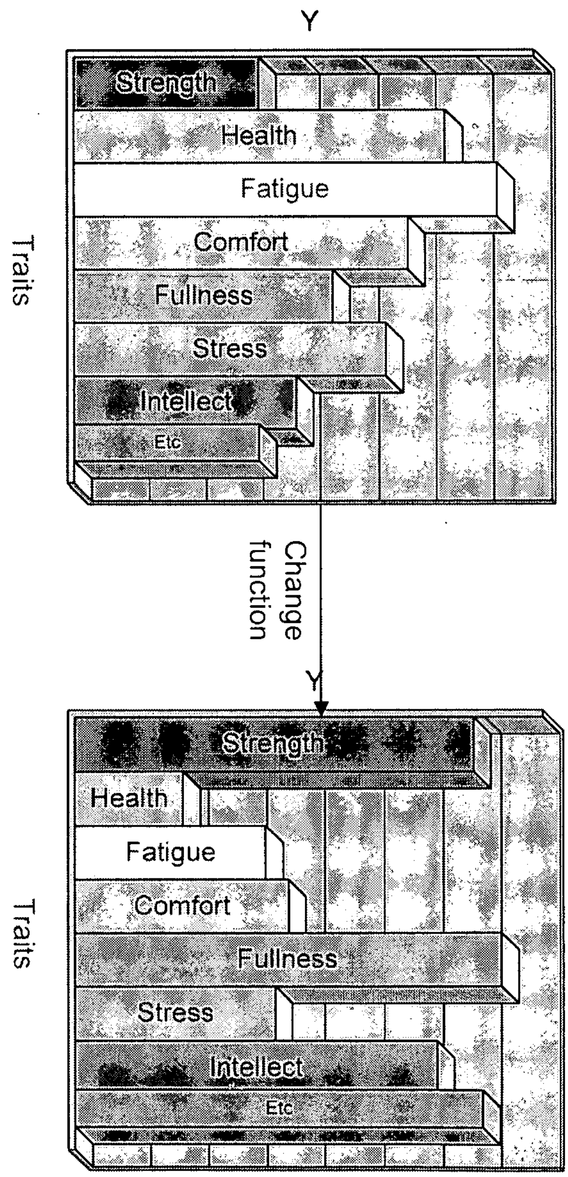
Y
Traits
Strength
Health
Fatigue
Comfort
Fullness
Stress
Intellect
Etc
Change function
Y
Traits
Strength
Health
Fatigue
Comfort
Fullness
Stress
Intellect
Etc

Figure 14

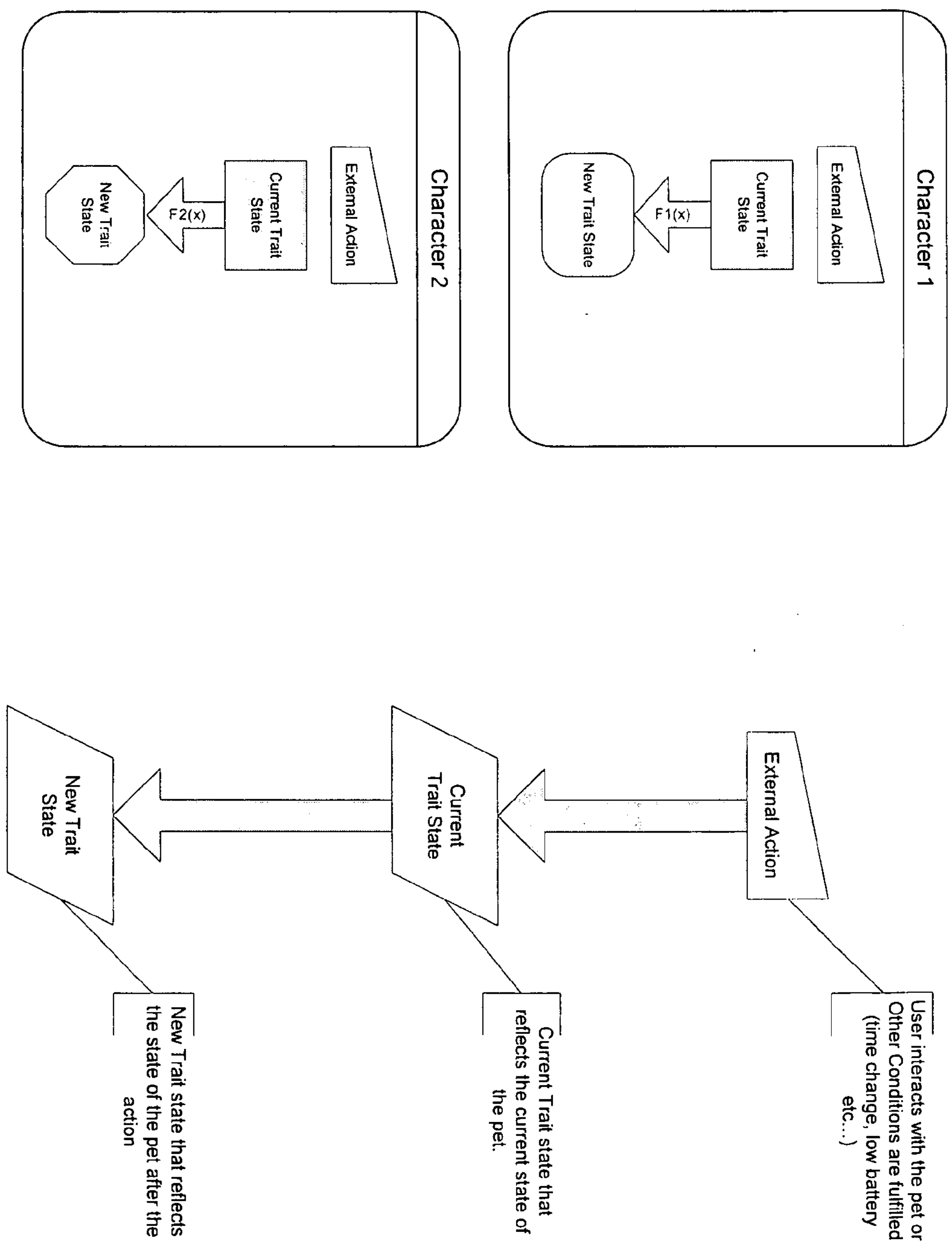
Character 1
External Action
Current Trait State
F1(x)
New Trait State
Character 2
External Action
Current Trait State
F2(x)
New Trait State
External Action
Current Trait State
New Trait State
User interacts with the pet or Other Conditions are fulfilled (time change, low battery etc...)
Current Trait state that reflects the current state of the pet.
New Trait state that reflects the state of the pet after the action

Figure 15

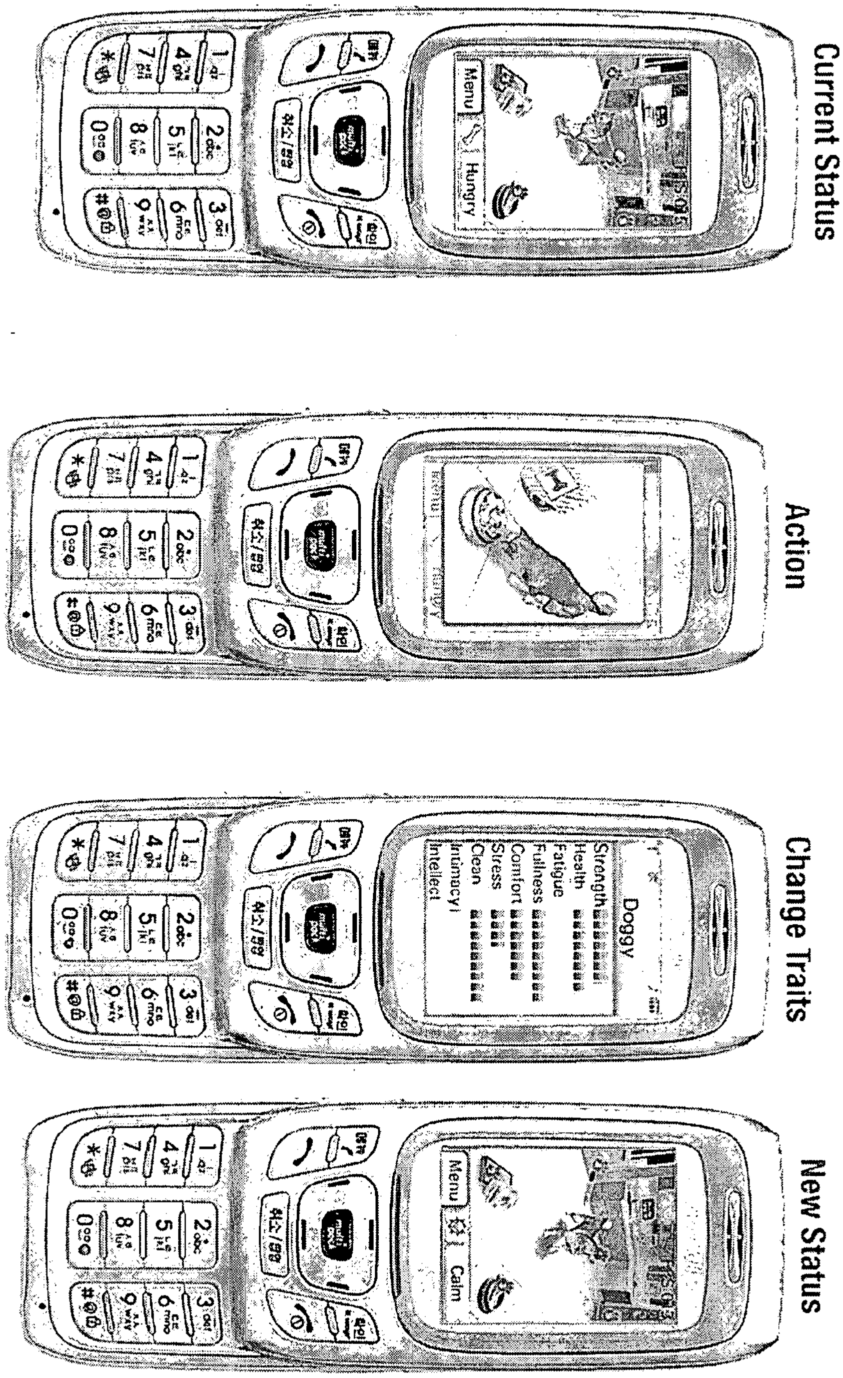
Current Status
Menu
Hungry
Action
Change Traits
Doggy
Strength
Health
Fatigue
Fullness
Comfort
Stress
Clean
Intimacy
Intellect
New Status
Menu
Calm

Figure 16

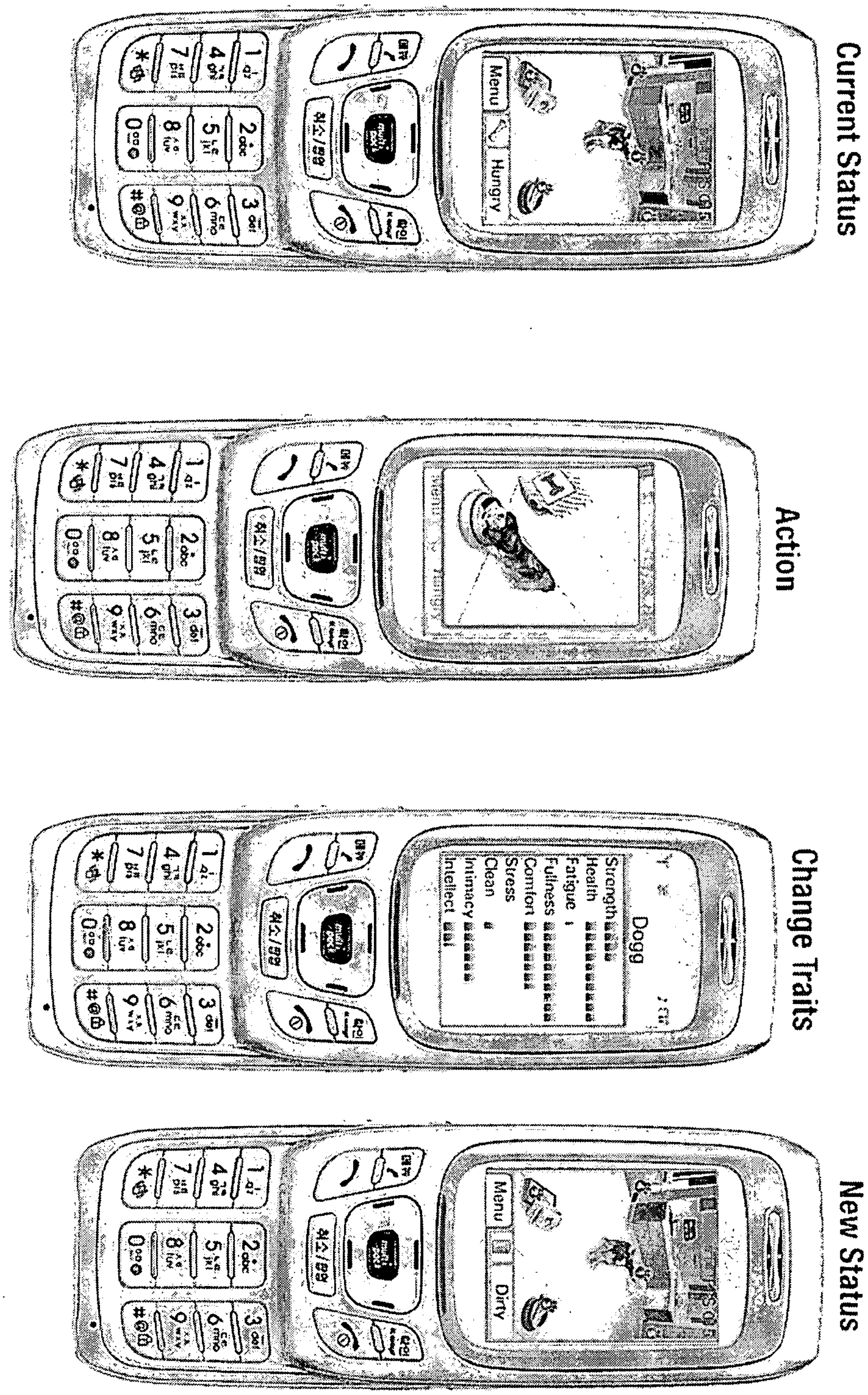
Current Status
Menu
Hungry
Action
Change Traits
Dogg
Strength
Health
Fatigue
Fullness
Comfort
Stress
Clean
Intimacy
Intellect
New Status
Menu
Dirty

Figure 17

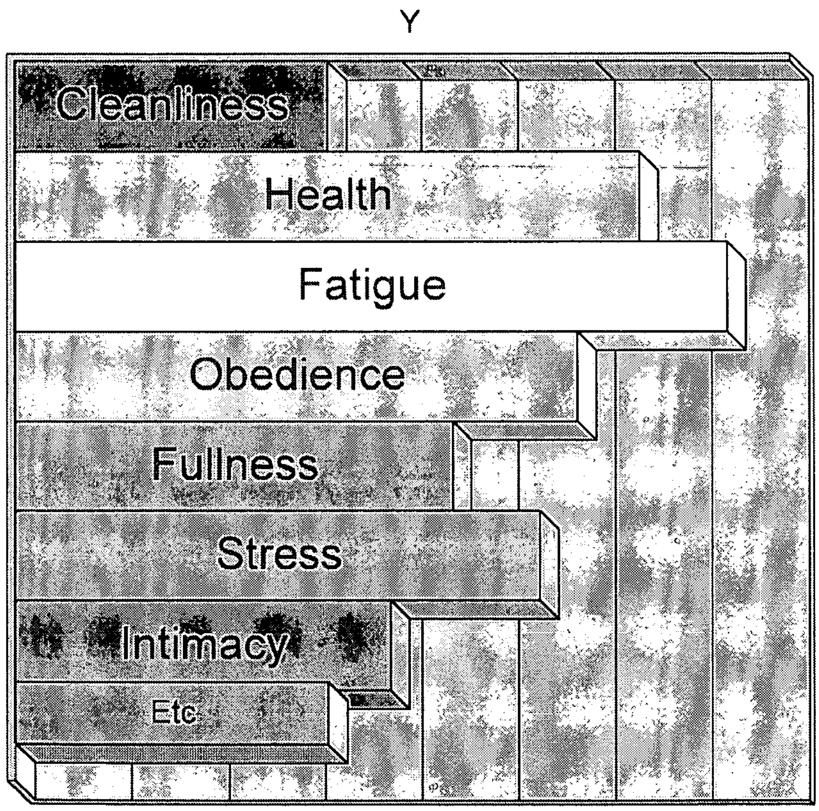
Y
Cleanliness
Health
Fatigue
Obedience
Fullness
Stress
Intimacy
Etc
Traits

Figure 18A

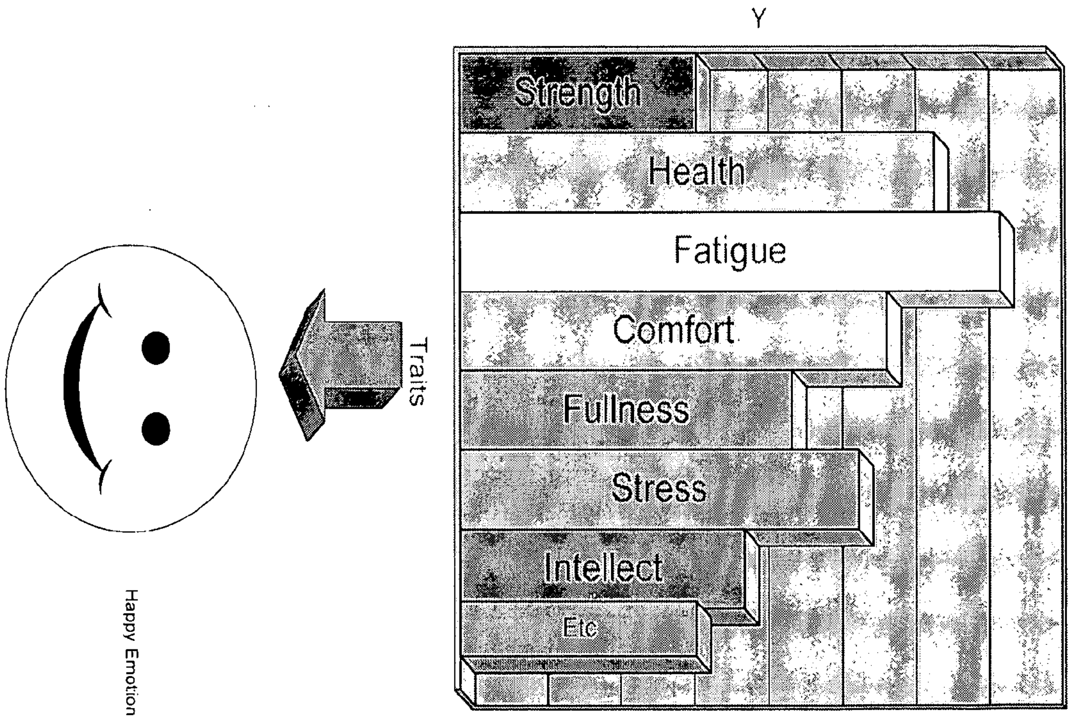
Y
Strength
Health
Fatigue
Comfort
Fullness
Stress
Intellect
Etc
Traits
Happy Emotion

Figure 18B

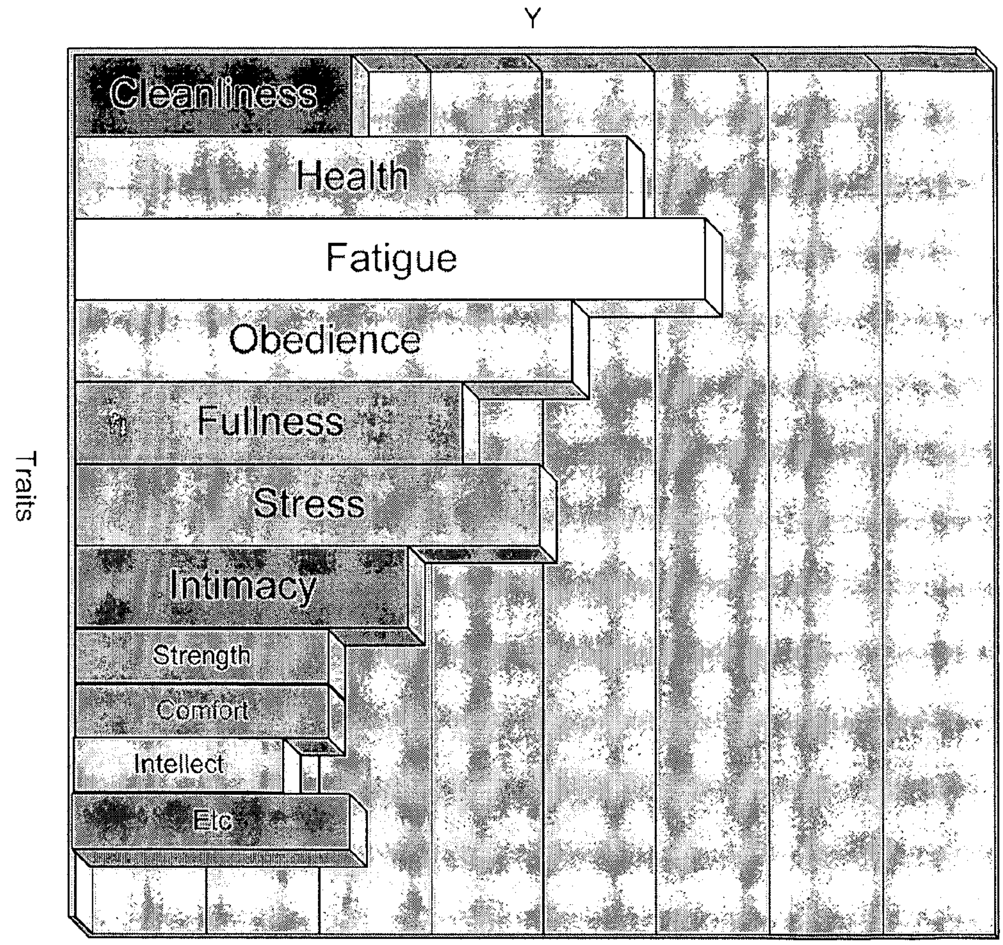
Y
Traits
Cleanliness
Health
Fatigue
Obedience
Fullness
Stress
Intimacy
Strength
Comfort
Intellect
Etc

Figure 18C

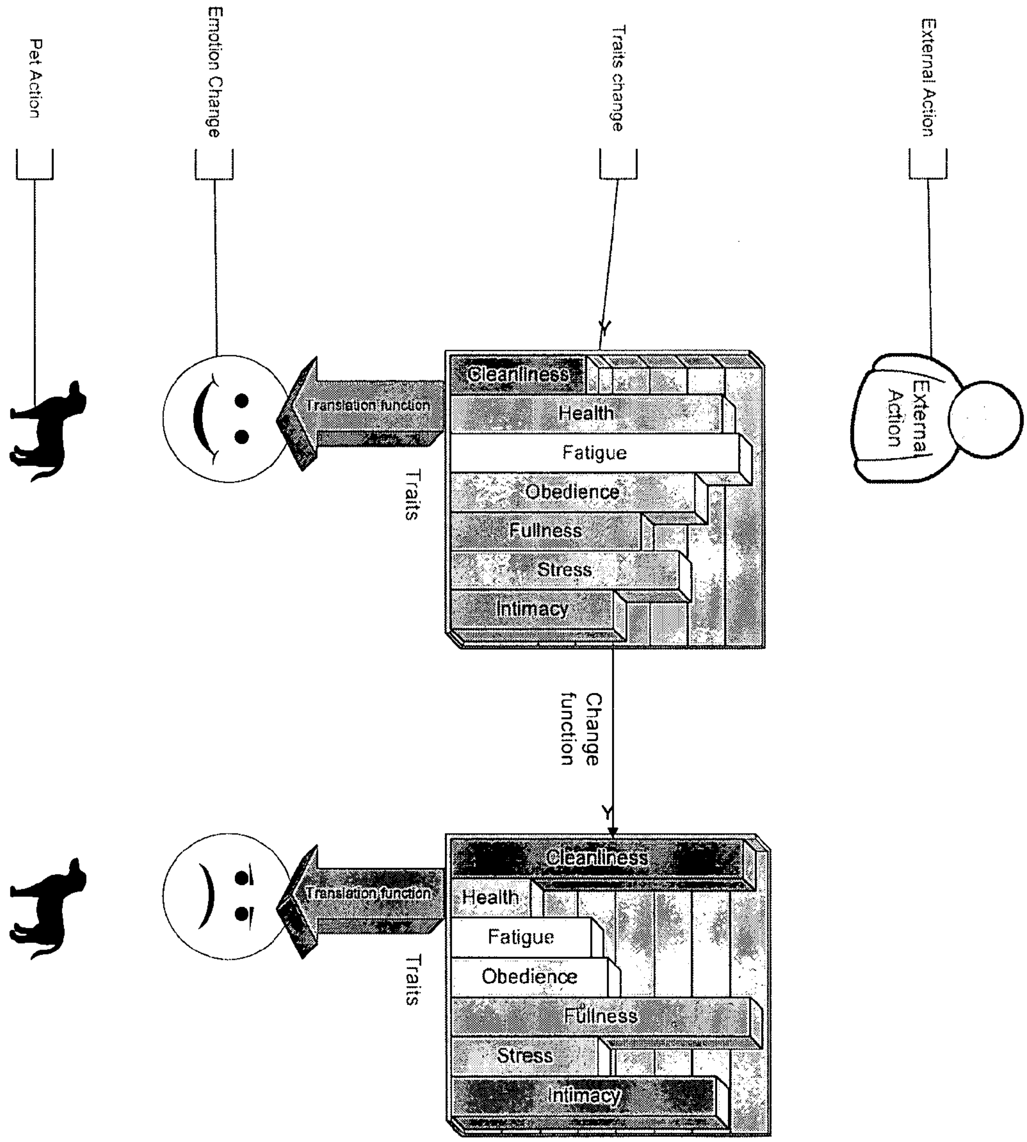
External Action
Traits change
Emotion Change
Pet Action
External Action
Cleanliness
Health
Fatigue
Obedience
Fullness
Stress
Intimacy
Translation function
Traits
Change function
Cleanliness
Health
Fatigue
Obedience
Fullness
Stress
Intimacy
Translation function
Traits

Figure 19A

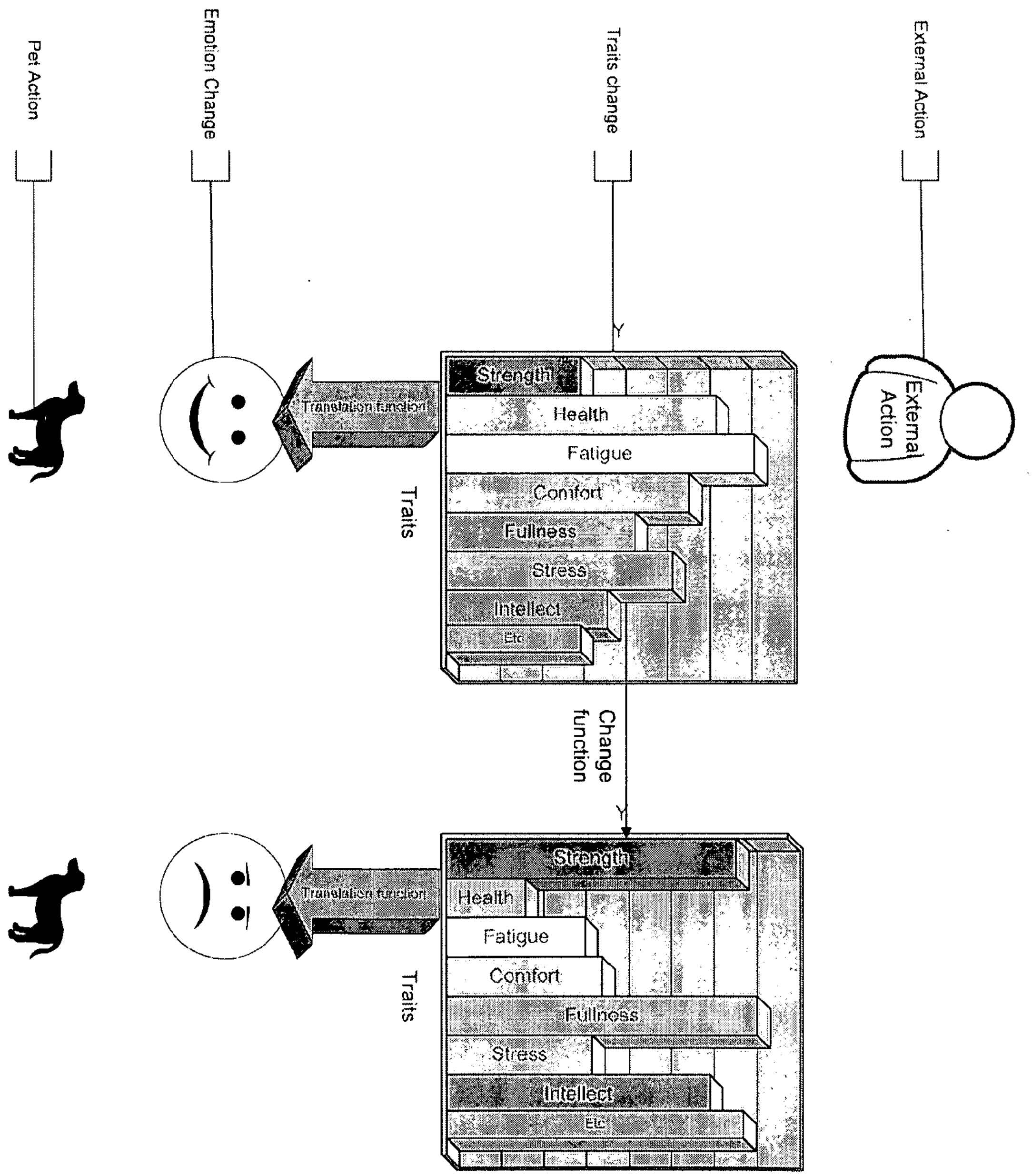
External Action
Traits change
Emotion Change
Pet Action
External Action
Strength
Health
Fatigue
Comfort
Fullness
Stress
Intellect
Etc
Translation function
Traits
Change function
Strength
Health
Fatigue
Comfort
Fullness
Stress
Intellect
Etc
Translation function
Traits

Figure 19B

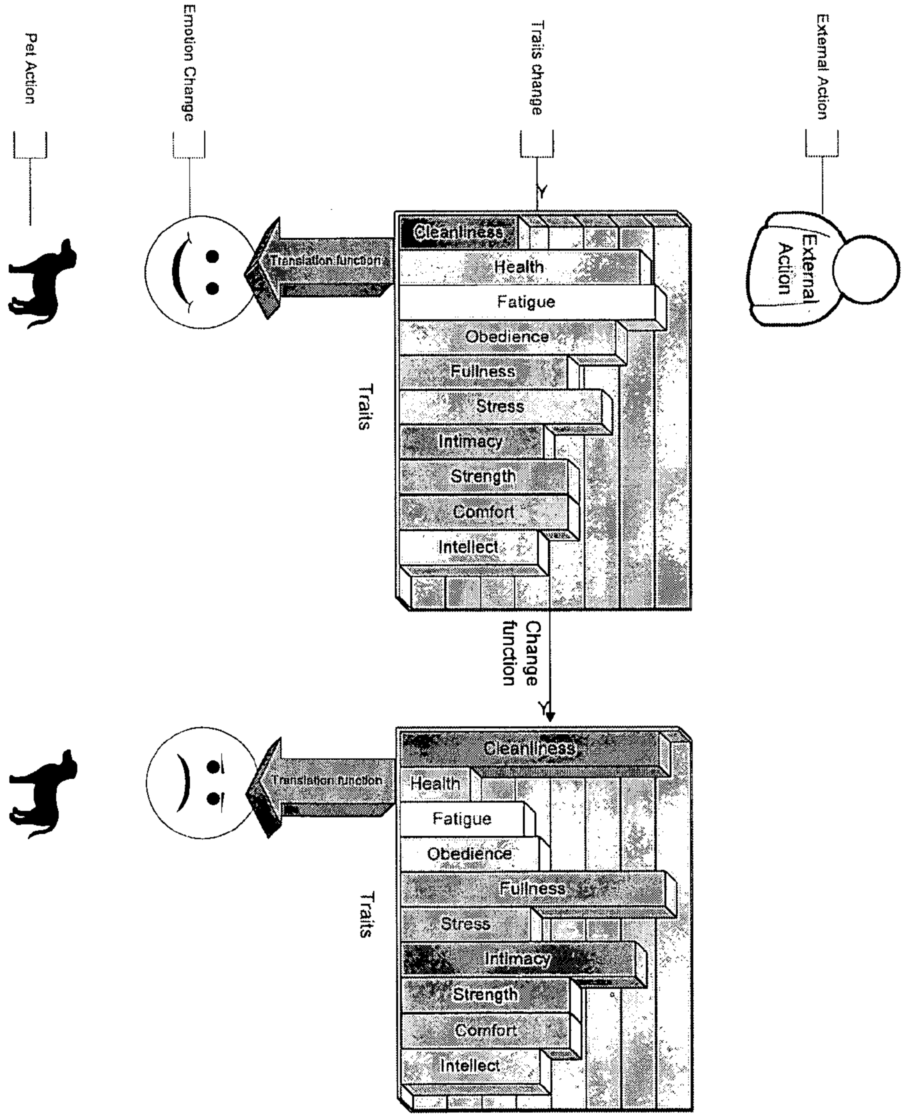
External Action
External Action
Traits change
Emotion Change
Pet Action
Cleanliness
Health
Fatigue
Obedience
Fullness
Stress
Intimacy
Strength
Comfort
Intellect
Traits
Translation function
Change function
Cleanliness
Health
Fatigue
Obedience
Fullness
Stress
Intimacy
Strength
Comfort
Intellect
Traits
Translation function

Figure 19C

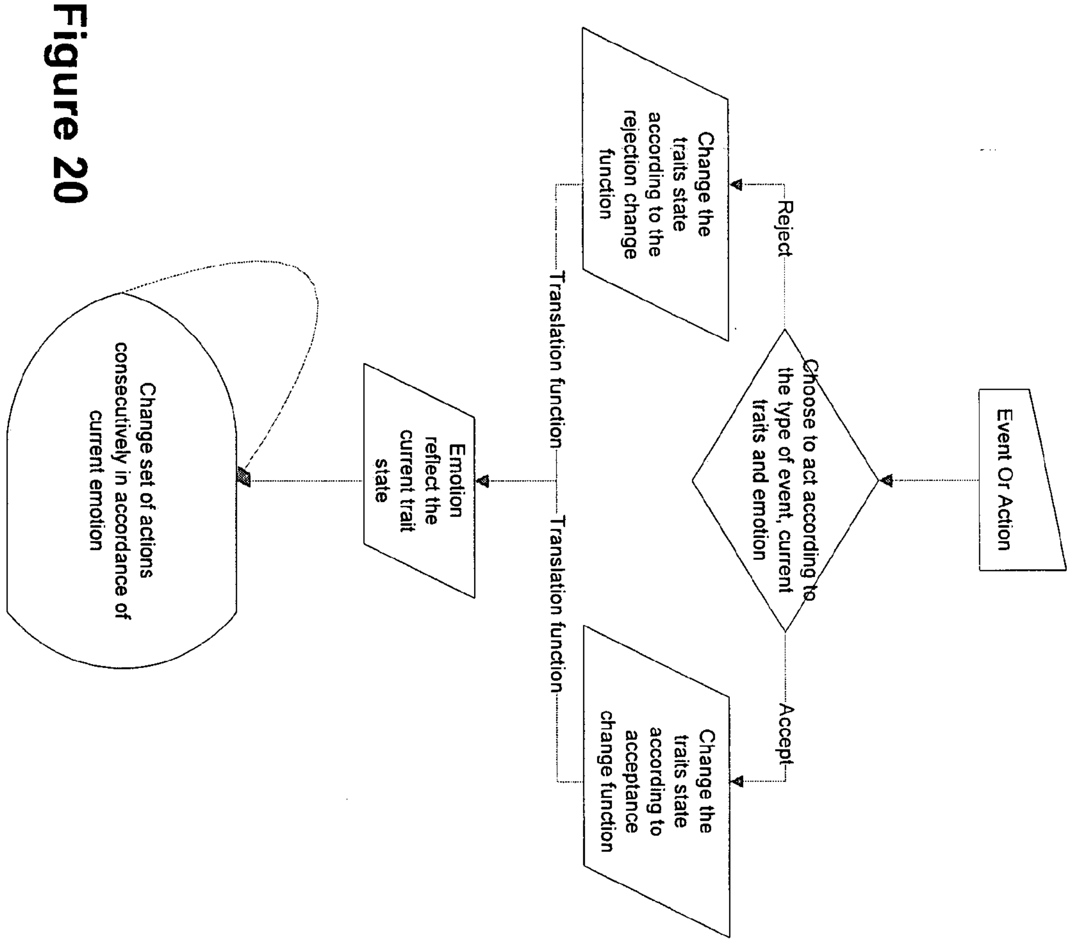
Event Or Action
Choose to act according to the type of event, current traits and emotion
Reject
Accept
Change the traits state according to the rejection change function
Change the traits state according to acceptance change function
Translation function
Translation function
Emotion reflect the current trait state
Change set of actions consecutively in accordance of current emotion

Figure 20

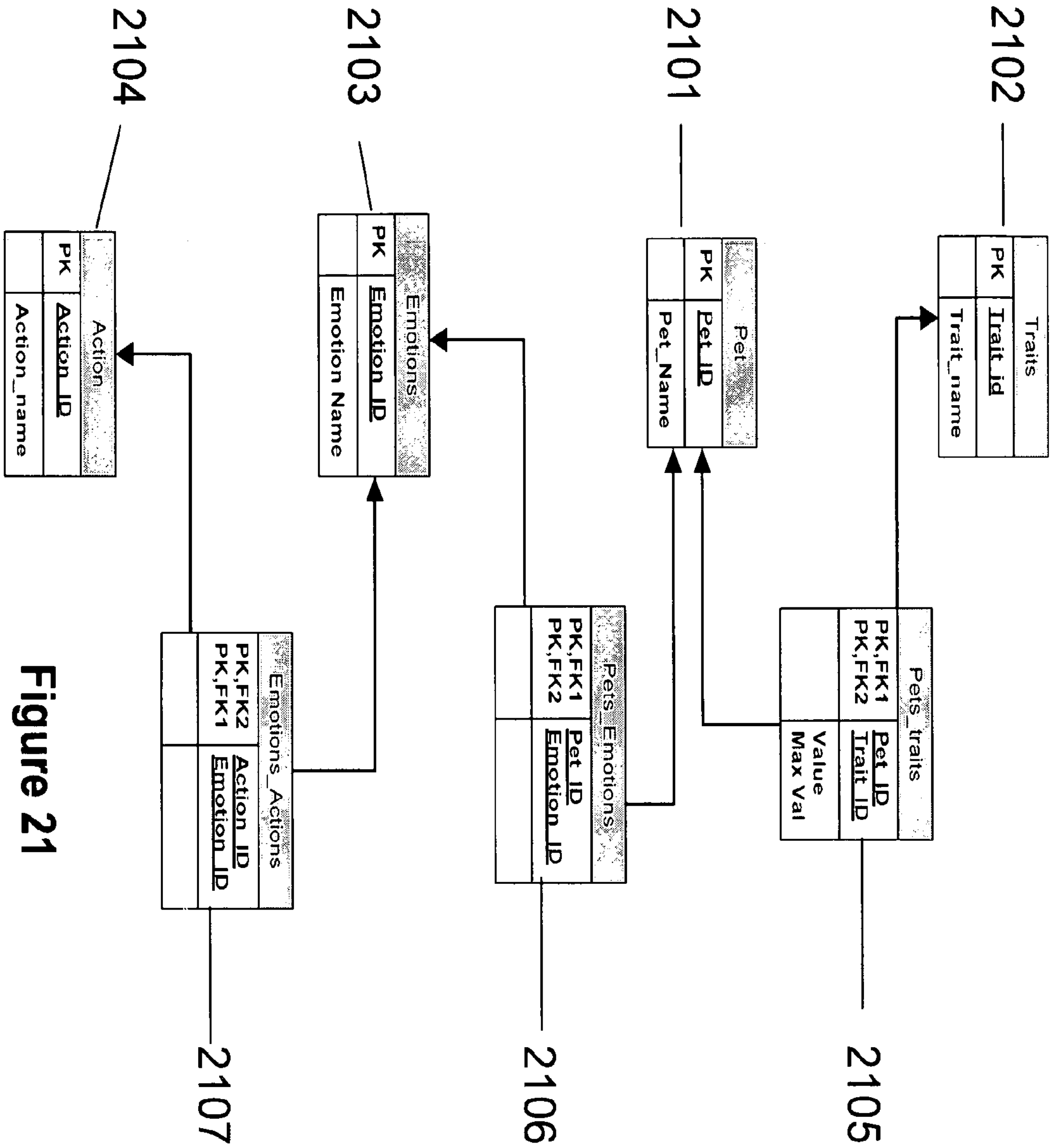
2102
Traits
PK
Trait_id
Trait_name
2101
Pet
PK
Pet_ID
Pet_Name
2103
Emotions
PK
Emotion_ID
Emotion Name
2104
Action
PK
Action_ID
Action_name
Pets_traits
PK,FK1
PK,FK2
Pet_ID
Trait_ID
Value
Max Val
2105
Pets_Emotions
PK,FK1
PK,FK2
Pet_ID
Emotion_ID
2106
Emotions_Actions
PK,FK2
PK,FK1
Action_ID
Emotion_ID
2107

Figure 21

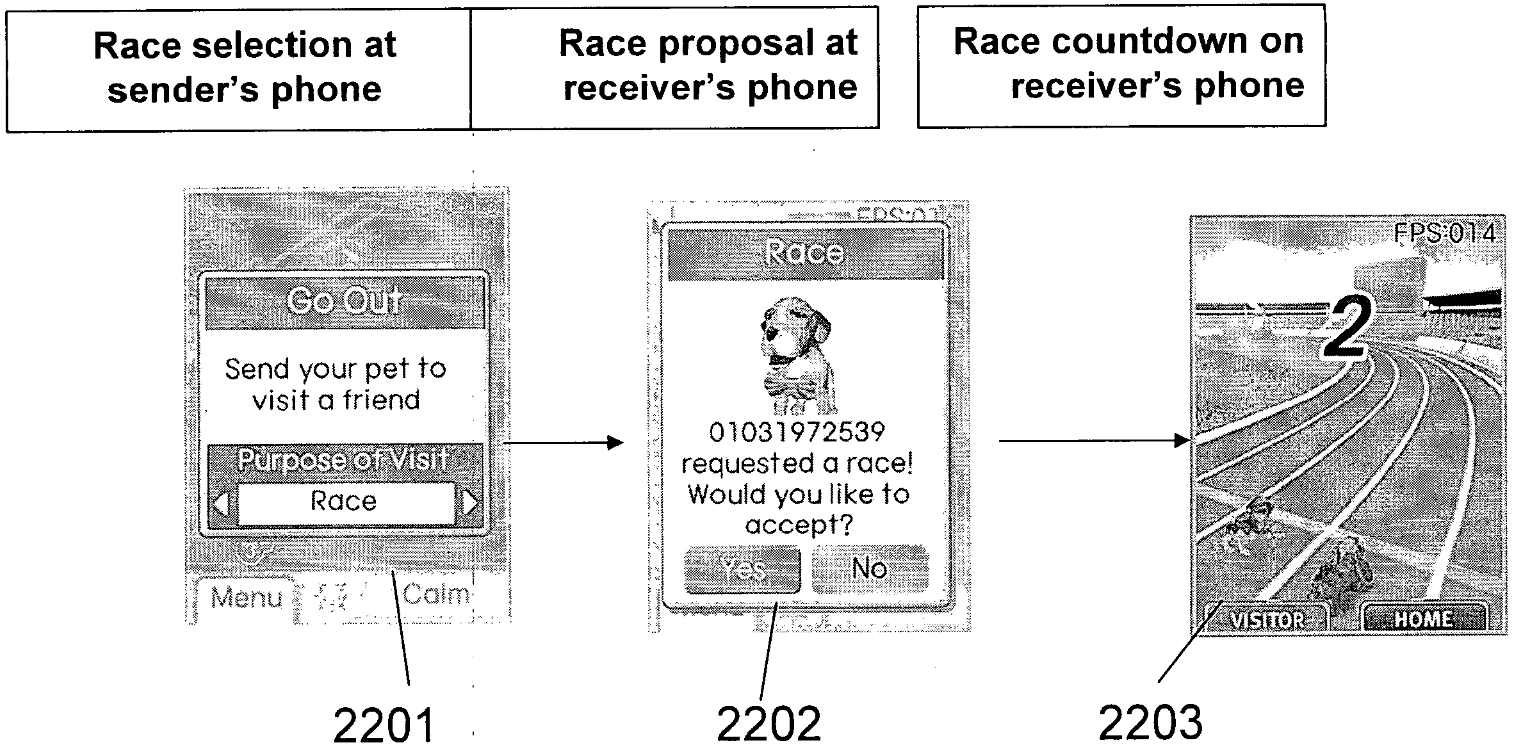
Race selection at sender's phone
Race proposal at receiver's phone
Race countdown on receiver's phone
Go Out
Send your pet to visit a friend
Purpose of Visit
Race
Menu
Calm
Race
01031972539 requested a race! Would you like to accept?
Yes
No
FPS:014
2
VISITOR
HOME
2201
2202
2203

Figure 22

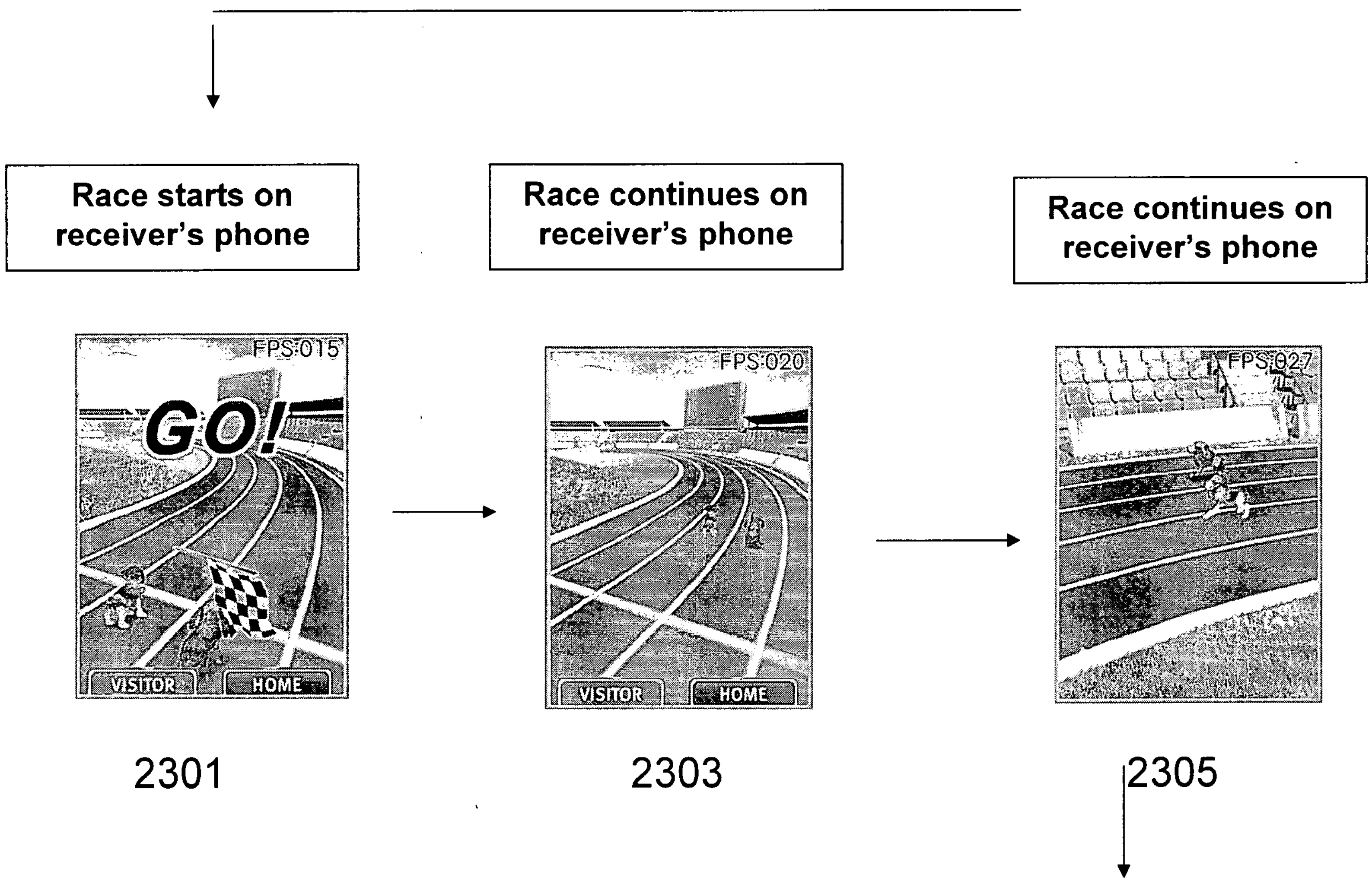
Race starts on receiver's phone
Race continues on receiver's phone
Race continues on receiver's phone
FPS:015
GO!
VISITOR
HOME
FPS:020
VISITOR
HOME
FPS:027
2301
2303
2305

Figure 23

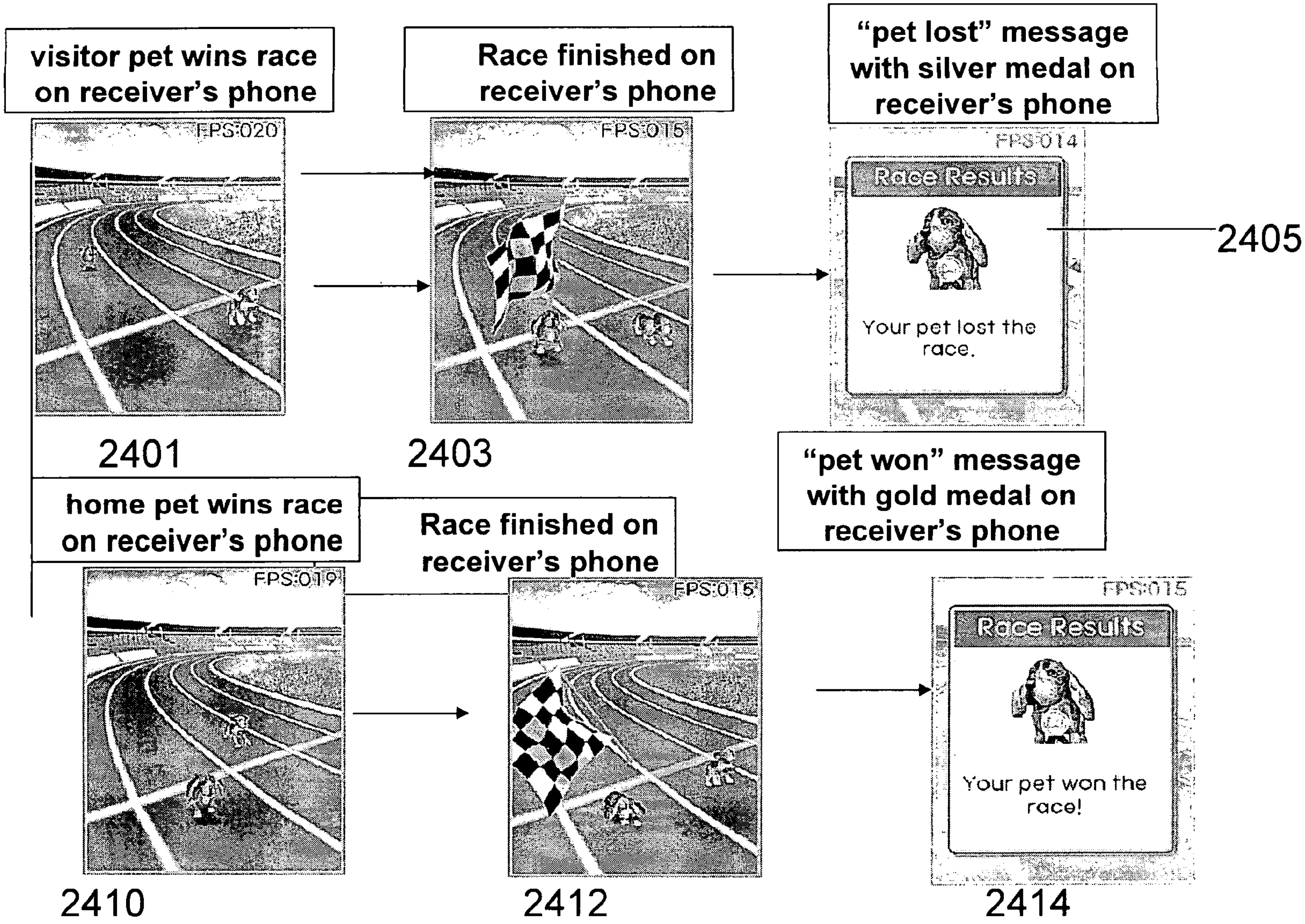
visitor pet wins race on receiver's phone
FPS:020
2401
Race finished on receiver's phone
FPS:015
2403
"pet lost" message with silver medal on receiver's phone
FPS:014
Race Results
Your pet lost the race.
2405
home pet wins race on receiver's phone
FPS:019
2410
Race finished on receiver's phone
FPS:015
2412
"pet won" message with gold medal on receiver's phone
FPS:015
Race Results
Your pet won the race!
2414

Figure 24

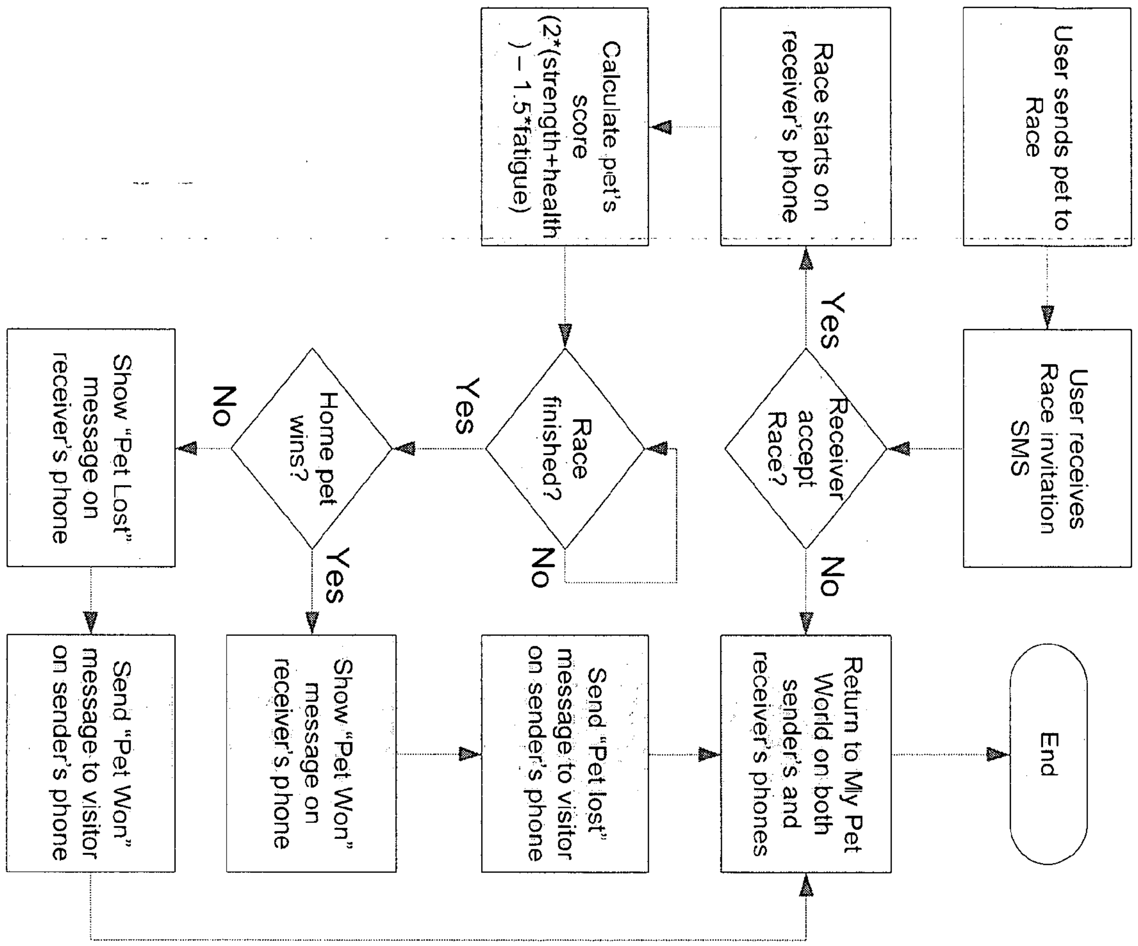
User sends pet to Race
User receives Race invitation SMS
Receiver accept Race?
Yes
No
Race starts on receiver's phone
Calculate pet's score (2*(strength+health) – 1.5*fatigue)
Race finished?
No
Yes
Home pet wins?
Yes
No
Show "Pet Won" message on receiver's phone
Send "Pet lost" message to visitor on sender's phone
Show "Pet Lost" message on receiver's phone
Send "Pet Won" message to visitor on sender's phone
Return to My Pet World on both sender's and receiver's phones
End

Figure 25